# EUROPEAN PATENT SPECIFICATION

(11) **EP 4 575 445 B1**
(45) Date of publication and mention of the grant of the patent: **02.12.2026**
(21) Application number: 24221372.6
(22) Date of filing: 19.12.2024
(51) Int. Cl.: G01M 11/00, G02B 6/24, G02B 6/36, G02B 6/42

(54) **AN OPTICAL PROBE AND RELATED METHODS**
OPTISCHE SONDE UND ZUGEHÖRIGE VERFAHREN
SONDE OPTIQUE ET PROCÉDÉS ASSOCIÉS

(30) Priority: 20.12.2023 EP 23218488
(43) Date of publication of application: 25.06.2025
(73) Proprietor: Keystone Photonics GmbH, 76185 Karlsruhe (DE)
(72) Inventor: Dietrich, Philipp-Immanuel, 76744 Wörth (DE); Machado, Andrès, 76185 Karlsruhe (DE); Rupp, Florian, 76185 Karlsruhe (DE)
(74) Representative: Altmann Stößel Dick Patentanwälte PartG mbB

(56) References cited:
- EP-A1- 4 001 980
- WO-A1-2022/266760
- WO-A1-2023/132785
- US-A1- 2018 143 245
- US-A1- 2019 258 175
- STEFAN SINGER ET AL: "3D-printed facet-attached optical elements for beam shaping in optical phased arrays", ARXIV.ORG, CORNELL UNIVERSITY LIBRARY, 201 OLIN LIBRARY CORNELL UNIVERSITY ITHACA, NY 14853, 24 March 2022 (2022-03-24), XP091183926

## Description

### Field of the invention

The present invention relates to optical coupling between optical components and, more particular, to an optical probe configured for optical testing of at least one micro-optical component, to a method for producing an optical probe, and to a method for optical testing of at least one micro-optical component.

In particular, the optical probe can be used for fabrication, calibration, testing, and preselection of micro-optical components, which are particularly configured for optical communication, sensor applications, medical sensors, automotive applications, quantum applications, or environmental sensing; however, using the optical probe in other applications is also possible.

### Related art

Optical probes which are configured for optically coupling to photonic integrated circuits featuring 3D-printed optics on fiber arrays are known. Further known are 3D-printed optics for optical packaging. Still further known are 3D-printed freeform probes for beam shaping of light exiting photonic integrated circuits.

WO 2018/083191 A1 discloses a fabrication of micro-optics for beam expansion on photonic integrated circuits for optical packaging.

Trappen M. et al. "3D-printed optical probes for wafer-level testing of photonic integrated circuits," Optics Express 28, 37996-38007, 2020, discloses 3D-printed optics on fiber arrays for probing wafers by inserting a 3D-printed micro-optics consisting of a mirror and a lens into an etched trench into a wafer.

Singer S. et al. "3D-printed facet-attached optical elements for beam shaping in optical phased arrays," Opt. Express 30, 46564-46574, 2022, discloses 3D-printed micro-optical elements on the facet of optical phase arrays.

WO 2023/132785A1 discloses an apparatus for wafer level testing of a semiconductor device comprising an optoelectronic unit, an optical interface and an optical fiber array optically coupled between the optoelectronic unit and the optical interface. The optoelectronic unit transmits one or more optical test signals to the semiconductor device and receives one or more optical response signals from the semiconductor device for testing at least one function of the semiconductor device. The optical interface optically couples the optical fiber array and the semiconductor device. Furthermore, the optical interface includes a steering element for steering the optical test signals towards the semiconductor device and the response signals towards the optical fiber array.

US 2018/0143245 A1 discloses an integrated optical probe card and a system for performing wafer testing of optical micro-electro-mechanical systems (MEMS) structures with an in-plane optical axis. On-wafer optical screening of optical MEMS structures may be performed utilizing one or more micro-optical bench components to redirect light between an out-of-plane direction that is perpendicular to the in-plane optical axis to an in-plane direction that is parallel to the in-plane optical axis to enable testing of the optical MEMS structures with vertical injection of the light.

EP 4 001 980 A1 discloses systems and methods for testing a photonic IC (PIC) with an optical probe having an out-of-plane edge coupler to convey test signals between the out-of-plane probe and an edge coupled photonic waveguide within a plane of the PIC. To accommodate dimensions of the optical probe, a test trench may be fabricated in the PIC near an edge coupler of the waveguide. The optical probe may be displaced along one or more axes relative to a prober to position a free end of the prober within the test trench and to align the probe's out-of-plane edge coupler with an edge coupler of a PIC waveguide. Accordingly, a PIC may be probed at the wafer-level, without first dicing a wafer into PIC chips or bars. The optical probe may be physically coupled to a prober through a contact sensor to detect and/or avoid physical contact between probe and PIC.

Further, WO 2022/266760 A1 and Stefan Singer et al, "3D-printed facet-attached optical elements for beam shaping in optical phased arrays", arxiv.org, Cornell University Library, 201 Olin Library Cornell University, Ithaca, NY 14853, 24 March 2022, disclose optical coupling mechanisms which form a background to the present invention.

### Problem to be solved

It is therefore an objective of the present invention to provide an optical probe configured for optical testing of at least one micro-optical component, a method for producing an optical probe, and a method for optical testing of at least one micro-optical component, which at least partially overcome the above-mentioned problems of the state of the art.

It is a particular objective of the present invention to provide an optical probe and a method configured for optical testing of components on die, batch, and wafer level. Preferably, the optical probe should have a compact probe head that can be inserted and probe in a trench of a wafer, wherein the trench may, preferably, 250 µm or less, more preferred 100 µm or less, especially 80 µm or less. Further, the optical probe should be configured for a small pitch, preferably of 127 µm or less, more preferred of 80 µm or less, especially of 50 µm or less. Herein, having a high pitch accuracy of sigma = 1000 nm or more and a low mode-field size variation of sigma = 10% or less would, particularly, be preferred.

Further, the optical probe should be configured for a high port count, preferably at least 24, more preferred at least 64, especially at least 128. Preferably, a small mode-field, preferably of 10 µm or less, more preferred of 5 µm or less, especially twice an operation wavelength or less, should be available at a coupling location of the testing circuit. Further, a calibration of probe variations shall be possible. The optical probe should be configured for robust probing even at high working distances. In addition, achieving a high testing throughput would be preferred. Preferably, the optical probe may implement at least one additional functionality, such as distance measurement, local probing of polarization, multiplexing, modulation, spectral analysis, intensity and phase measurements, heterodyne detection and transmittance of signals.

It is particularly desirous if the optical probe is configured for working in the near ultraviolet range, the visual range, the near infrared range, and the medium infrared range, referring to a wavelength range of 100 nm to 10 µm, preferably of 200 nm to 4 µm, more preferred 530 nm to 2 µm, especially at least 1250 nm to 1650 nm. A high reproducibility of the optical coupling between the probe head and the at least one micro-optical component with variations of 0.5 dB or less, more preferred of 0.25 dB or less would be preferred.

### Summary of the invention

This problem is solved by an optical probe configured for optical testing of at least one micro-optical component according to claim 1, a method for producing an optical probe according to claim 11, and a method for optical testing of at least one micro-optical component according to claim 13.

Preferred embodiments, are listed in the dependent claims and throughout the following description.

In a first aspect, the present invention relates to an optical probe configured for optical testing of at least one micro-optical component. According to the present invention, the optical probe comprises
- a probe head, wherein the probe head is calibrated and wherein the probe head comprises a testing circuit, wherein the testing circuit is fixed on a mechanical support;
- at least one micro-optical element, wherein the micro-optical element is a separate element with regard to the testing circuit and in mechanical contact with the testing circuit,
wherein the micro-optical element is configured to optically couple light between the testing circuit and the micro-optical component, thereby being configured to determine an optical performance of the micro-optical component.

As generally used, the term "optical probe" refers to an optical device, which is configured for optical testing of at least one micro-optical component. In addition, the optical probe may exhibit at least one of a mechanical functionality, an electrical functionality, or an optical functionality as described below in more detail. For a purpose of optical testing, the optical probe as used herein comprises a probe head having a testing circuit, wherein the probe head may be aligned in a manner that light may couple between the testing circuit and the micro-optical component. As further generally used, the term "probe head" refers to a terminal piece of the optical probe, wherein the terminal piece comprises a micro-optical element configured to optically couple light between the testing circuit and the micro-optical component. In a particularly preferred embodiment, the probe head may be movable relative to the micro-optical component to be tested. For a purpose of being dynamically movable in an easy manner, the probe head may, preferably, exhibit a low weight.

As already indicated above, the optical probe is configured for the optical testing of at least one micro-optical component. As generally used, the term "micro-optical component" refers to a device under testing, wherein the device may, preferably, be or comprise a wafer having multiple photonic integrated circuits, or individual photonic integrated circuits. In general, then micro-optical component may comprise a plurality of optical structures that inherently assume small dimensions, preferably of 10 µm or less, more preferred of 5 µm or less, especially of 1 µm or less, configured to execute an intended function, in particular as a waveguide or a groove of a grating, or that has a total dimension 10 mm or less. In a preferred embodiment, the micro-optical component may be produced on a photonic platform, particularly selected from a SOI (Silicon on Insulator), InP (Indium Phosphide), SiN (Silicon Nitride), or LNOI (Lithium Niobate thin film). In an alternative embodiment, the micro-optical component may be a non-planar component, especially an optical element selected from a micro-lens, a grating, an optical isolator, or a mirror.

As already further indicated above, the optical probe comprises a probe head having a testing circuit. As generally used, the term "testing circuit" refers to at least one photonic integrated circuit, which is configured for characterizing a performance of a micro-optical component. The testing circuit may, preferably, comprise the same material, fabrication batch, wafer or technology as the micro-optical element. However, using a different type of testing circuit may also be feasible. For a purpose of optical testing of the at least one micro-optical component, the testing circuit may have active optical structures, especially be selected from at least one of a light source, such as a laser or a superluminescent light emitting diode (SLED), or a detector, such as a Ge photodiode, or it may be coupled to an optical fiber or to a fiber array, particularly to be observable by a macroscopic optical instrument. As generally used, the term "optical fiber" refers to an extended, round optical element which is configured for guiding light by using a facet, wherein the term "facet" refers to a terminal surface of a light guiding structure, especially of a waveguide, through which light is transmitted or received. As further generally used, the term "fiber array" refers to at least one optical fiber which is in connection with at least one mechanical element, preferably selected from a glass block or a V-Groove array. In a preferred embodiment, the testing circuit may have at least one of an electrical functionality, a distance sensor, a mechanical sensor, an acceleration sensor, a force sensor, or a structure having a micro-electro-mechanical system (MEMS). Still, further embodiments of the testing circuit may also be feasible.

As generally used, the term "photonic integrated circuit" refers to a planar device comprising at least one of a waveguide or a photonic device having at least one surface emitting device or a photosensitive device, preferably selected from a photodiode, an image sensor or a Vertical cavity surface emitting laser (VCSEL). As used herein, the term "planar" indicated that a corresponding device is obtained by using 2D-lithography on a planar substrate. Based on this definition, optical fibers are not comprised by a photonic integrated circuit, whereas devices created with the ioNext platform, SiN, SOI, or silicon rich oxide are components of a photonic integrated device. The photonic integrated circuit may comprise active and passive waveguide devices, preferably selected from a photodetector, a light source, an optical modulator, a spectrum analyzer, a power splitter, or a polarization splitter, filter or stripper, or a multiplexer. The photonic integrated circuit may also exhibit at least one advanced electrical functionality, especially a transistor, a CMOS component, an electrical line, or an electrical waveguide line. In a particularly preferred embodiment, the testing circuit and also the micro-optical component may be a photonic integrated circuit. In an alternative embodiment, the micro-optical component can be an optical integrated circuit or a micro-optical device.

As already further indicated above, the optical probe further comprises at least one micro-optical element. As generally used, the term "micro-optical element" refers to an optical structure which is configured for modifying a propagation of light, in particular by at least one of focusing, diverging, redirecting, deflecting, waveguiding, or rotating a polarization of the light. For this purpose, the micro-optical element may, preferably, comprise at least one element selected from a mirror, particularly a total internal reflection mirror or a metal mirror; an optical lens; an optical grating; an optical waveguide, particularly a non-planar waveguide; a photonic wire-bond; a light taper; an optical metamaterial; or an optical element having a whispering gallery guiding mechanism. The micro-optical element may, preferably, be a three-dimensional element, wherein the term "three-dimensional element" refers to an object having an extension of at least 1 µm has in all spatial directions. Preferably, the micro-optical element may have at least one free-form surface, wherein the at least one free-form surface may be a computer-programmable surface. More preferred, the micro-optical element may have a 3D freeform-structure. Preferably, the micro-optical element may have overall extensions of 1000 µm or less, more preferred of 500 µm or less, in particular of 250 µm or less. Preferably, the micro-optical element may have at least one optical surface of a surface roughness of 250 nm or less, more preferred of 100 nm or less, in particular of 20 nm of less, root-mean-square as measured by at least one of an atomic force microscope (AFM) or a white-light interferometer. Preferably, the micro-optical element may be transparent from 250 nm to 4500 nm, more preferred of at least 530 nm to 1650 nm; however a different transparent wavelength range may also be feasible.

Preferably, the micro-optical element may be produced by using a polymeric material, in particular an acrylic material, especially by light curing the polymeric material. Herein, an additive manufacturing process may, preferably, be used; however, using a different type of at least one of the polymeric material or the manufacturing process may also be feasible. According to the invention, the micro-optical element is produced in a manner that an alignment accuracy of at least 1000 nm, more preferred of at least 500 nm, in particular of at least 100 nm, with respect to a coupling location at the testing circuit is obtained. As a result, the mode-field pitch of the micro-optical element may, preferably, vary 1000 nm or less, more preferred 500 nm or less, in particular 100 nm or less. Preferably, the micro-optical element may be produced, especially by using a direct-write method, on the testing circuit, especially in a manner that the alignment accuracy of at least one optical effective portion of the micro-optical element and/or portion of the micro-optical element interacting with light of at least 1 µm, more preferred of at least 500 nm, in particular of at least 100 nm, may be obtained. Preferably, the micro-optical element may be produced in a manner that a shape accuracy of the micro-optical element of at least 1 µm, more preferred of at least 500 nm, in particular of at least 100 nm, may be obtained.

The optical structure of the micro-optical element which is configured for modifying the propagation of light can, preferably, be configured to generate a mode-field diameter of the wavelength of the light to be modified to 50 µm. Herein, generating the mode-field diameters refers to an optical arrangement which configured to create a mode-field having the corresponding mode-field diameter. By way of example, at a wavelength of 1.55 µm of incident light, the mode-field diameter may, preferably, be 1.55 µm to 50 µm. As generally used, the term mode-field diameter refers to a diameter at a 1/e² intensity of a waist of the beam; however, using a different definition may also be feasible. In general, the mode-field diameter may be measured at the waist of the beam, which may, typically, be aligned with a coupling location to achieve a best coupling between the probe head and (the at least one micro-optical component. A one-sigma-variation of the mode-field between different structures may, preferably, be 20 % or less, more preferred 10 % or less, while a resulting coupling variation may, preferably, be 5% or less when coupling into identical components.

In a preferred embodiment, the testing circuit may reduce a mode-field diameter at a coupling location of the testing circuit to generate a divergent beam being emitted by the coupling location of the testing circuit. This embodiment allows designing a particularly compact micro-optical element having a relatively large working distance. Smaller mode fields of the testing circuit compared the mode-fields of fiber cores may result in a micro-optical element having reduced dimensions and, therefore, enabling a probing in narrower trenches. In addition, a time for producing of the micro-optical element can be decreased.

In a preferred embodiment, the testing circuit may be configured to modify either a pitch or a mode-field diameter of the fiber array. As generally used, the term "pitch" refers to a distance between two objects, in particular optical elements, two coupling locations, two mode-fields, or two parallel waveguides. The pitch may be irregular or constant. A preferred pitch may be selected from a value of 80 µm, 127 µm or 250 µm; however, using a different value may also be feasible. A micro-optical component having a particular pitch is used herein as a micro-optical component comprising at least one pair of coupling locations, mode-fields or parallel waveguides having the particular distance. A pitch variation refers to a deviation from a specification. Further, the expression "modification of a pitch" either refers to altering the valued of a pitch, e.g. from a pitch of 127 µm at the fiber array to a different pitch of 25 µm at the micro-optical component, or to equalizing a pitch, by e.g. compensating small variations of a fiber array pitch. Herein, the term "equalizing" refers to a process of reducing pitch inaccuracies of a fiber array, typically up to 1 µm to a pitch variation of at least 500 nm, preferably of at least 100 nm, in particular of at least 50 nm. The equalization can, preferably, be combined with a calibration measurement which takes into account a variation of the transmission. For the term "fiber array", reference can be made to the definition above. In a preferred embodiment, the testing circuit may match different pitches, particularly to overcome known shortcomings that no pitches below 80 µm are currently achievable by using a fiber array as the optical fiber, which has a typical minimum diameter of 80 µm. Processes which may reduce the fiber diameter to 80 µm or less may often result in a larger pitch variation and are, therefore, not desirable.

In a particular embodiment, the probe head may be configured to function as an optical phase array. As generally used, the term "optical phase array" refers to an optical element having at least one mode-field. In general, a plurality of separated mode-fields can be used. At least one of a phase, an intensity or a polarization of the at least one mode-field can be modified to manipulate a field distribution as emitted by the mode-field. In a preferred embodiment, an array of waveguides at a test circuit facet, preferably combined with a taper enlarging the mode-field, can be used. The phase and intensity of the light emitted by the waveguides at the facet may be modified by using or a device configured to control phase and/or intensity, in particular a Mach-Zehnder interferometer, within the photonic integrated circuit.

As further already indicated above, the micro-optical element is a separate element with regard to the testing circuit. As generally used, the expression that two individual elements are "separated from" from each other refers to a spatial arrangement in which two individual elements comprise different materials and/or are produced by applying at least one processing step to at least one of the elements independent from the other element. By way of example, a prism may be 3D-printed on an already existing fiber, thereby not altering the fiber, whereby the prism is considered as being separated from the fiber. In contrast hereto, the prism it is not considered as being separated from the fiber if the prism may be introduced into the already existing fiber, e.g. by milling, etching or polishing the prism into the fiber.

As further already indicated above, the micro-optical element is in mechanical contact with the testing circuit. As further generally used, the term "mechanical contact" refers to a spatial arrangement of two individual elements in that the two individual elements maintain their spatial position with respect to each other. Herein, the mechanical contact may be a direct mechanical contact or an indirect mechanical contact. Whereas the term "direct mechanical contact" indicates a spatial arrangement in which both individual elements touch each other at adjoining points or surfaces, the term "indirect mechanical contact" indicates a further spatial arrangement in which both individual elements maintain their spatial position by using at least one further element. By way of example, the at least one further element may be a common carrier to which the two individual elements are mounted, or a separating element between the two individual elements. In preferred embodiments, the micro-optical element may be in mechanical contact with the testing circuit by having attached the micro-optical element to a facet comprised by the testing circuit, or a 3D-printed spacer may be placed between the micro-optical element and the testing circuit, or the micro-optical element may be attached to a mechanical support, in particular a fixture, which may, directly or indirectly, be in mechanical contact with the testing circuit. For this purpose, the micro-optical element is fixed to the mechanical support which is in mechanical contact with the testing circuit. As generally used, the term "fixing" refers to particular process applied to one or two elements or a resulting arrangement with regard to the one or two elements, whereby a temporary or permanent mechanical contact between the two elements comprises that a position with respect to each other is maintained within all six degrees of freedom during a fixation time. Preferably, a mechanical carrier, preferably a joining element, such as a mechanical clamp, can be used for fixing the two elements; however using a different type of mechanical carrier may also be conceivable. Alternatively or in addition, the process may comprise applying at least one adhesive, preferably a UV curable adhesive, and curing the adhesive or a mechanical clamp. In preferred embodiment, the adhesion promoter may be used to increase a robustness of the mechanical contact.

According to the present invention, the micro-optical element is configured to optically couple light between the testing circuit and the micro-optical component. As generally used, the term "light" refers to electromagnetic radiation in the near ultraviolet range, the visual range, the near infrared range, and the medium infrared range, referring to a wavelength range of 100 nm to 10 µm, preferably of 200 nm to 4 µm, more preferred 400 nm to 2.5 µm, especially at least 1250 nm to 1650 nm. As further generally, the term "optically coupling" refers to a process of transmitting light between two optical elements, preferably two waveguide-based elements. By way of example, the coupling process may comprise transmitting light from a laser into an optical waveguide, or between two individual optical waveguides. Preferably, the coupling process may be performed in a manner that the optical coupling between the two optical elements may be maximized, in particular by translating or tilting at least one of the optical elements with respect to each other. In particular, the term "coupling efficiency" is generally used for indicating a resulting effect of the optical coupling as achieved by the coupling process between the two optical elements. Preferably, a coupling efficiency between two optical waveguides may be 0.5 dB to 3 dB. However, only a significantly lower coupling efficiency can be acceptable in certain embodiments as known to the person skilled in the art.

The micro-optical element, which is configured to optically couple light between the testing circuit and the micro-optical component, is, in accordance with the present invention, configured to determine an optical performance of the micro-optical component. As used herein, the term "optical performance" refers to at least one parameter being indicative for at least one property of at least one optical element. Herein, the optical performance may, preferably, refer to the optical micro-optical component, however the optical performance of at least one further optical element, particularly selected from the photonic integrated circuit, the probe head, the micro-optical element, the fiber array, can also be referred to. The optical performance may, especially, refer to at least one of the coupling efficiency of a known mode-field to the micro-optical component, a polarization property, a back-reflection property, a pitch-accuracy, a waveguide propagation loss, a spatial and/or angular distribution of light emitted into free space, a modulator performance such as modulation speed, an extinction ratio, a laser performance such as a relative intensity noise, an light current-voltage (LIV) characteristics, a linewidth, an amplification of a semiconductor optical amplifier (SOA), a responsivity of a photodiode, a bandwidth of an optical element in a temporal domain and/or a frequency domain, a back-reflection, a bit-error rate of an optical data transmission, a pitch, a transmission; however, using at least one further parameter may also be feasible.

For this purpose, the testing circuit may have an optical functionality, wherein the optical functionality may be independent from the optical functionality operating the micro-optical element. In addition, the testing circuit may have at least one of a mechanical functionality or an electrical functionality. As generally used, the term "optical functionality" indicates that the testing circuit comprises at least one photonic integrated circuit, which is configured for characterizing at least one optical performance of a micro-optical component as described above. Similarly, the term "mechanical functionality" indicates that the testing circuit comprises at least one functionality, which is configured for characterizing at least one mechanical performance of a micro-optical component, particularly selected from at least one parameters of a MEMS actuator, in particular a response time, or a mechanical behavior of a surface acoustic wave sensor. Further, the term "electrical functionality" indicates that the testing circuit comprises at least one functionality which is configured for characterizing at least one electrical performance of a micro-optical component, particularly selected from at least one of a characteristics parameters of semiconductor junctions such as capacitance, a performance of a modulator, an operating parameter of a laser, or a photocurrent configured for measuring a resistance.

In general, characterizing the optical performance refers to a measurement of performance.

The purpose of characterizing the optical performance is to generate a temporary optical coupling to determine the optical performance. Herein, a measurement of the optical performance may, in particular, comprise measuring at least one of a pitch, a mode-field, an angular distribution of light emitted from the probe, a coupling efficiency to a known component and a transmission from an optical fiber connected to a probe into free space. The measurement of the optical performance may, in addition, comprise measuring at least one mechanical or electrical property resulting in at least one optical signal, e.g. a characterization of a micro-mechanical switch for switching light between waveguides. In contrast hereto, optical packaging is not used herein for characterizing the optical performance of the micro-optical component, since optical packaging provides a permanent optical connection in order to effect an operation of the micro-optical component rather than measuring its optical performance.

According to the invention, the optical performance of the probe head is calibrated. As generally used, the term "calibrated" refers to a measurement of a performance which is accounted for in a subsequent step. Preferably, the calibration may comprise a numerical compensation of a measured coupling loss, a rework, scrapping an element or altering measurement parameters in a subsequent step according to the characterizing the optical performance.

In a further aspect, the present invention relates to a method for producing an optical probe, in particular the optical probe as described elsewhere herein. The method comprises at least the following steps i) and ii):
(i) providing a probe head, wherein the probe head comprises a testing circuit; and
(ii) producing at least one micro-optical element on the testing circuit by using a direct-write process, wherein the micro-optical element is being produced as a separate element with regard to the testing circuit and in mechanical contact with the testing circuit,
wherein the micro-optical element is configured to optically couple light between the testing circuit and a micro-optical component, thereby being configured to determine an optical performance of the micro-optical component.

Herein, the indicated steps may, preferably, be performed in the given order, commencing with step (i) and finishing with step (ii). However, any or all of the indicated steps may also be repeated several times and/or preformed concurrently in part.

According to step (i), the probe head is provided, wherein the probe head comprises a testing circuit. For the terms "probe head" and "testing circuit", reference can be made to the definitions above.

According to step (ii), the at least one micro-optical element is produced on the testing circuit by using a direct-write process, wherein the micro-optical element is being produced as a separate element with regard to the testing circuit and in mechanical contact with the testing circuit, in a manner that the micro-optical element is configured to optically couple light between the testing circuit and the micro-optical component, thereby being configured to determine the optical performance of the micro-optical component. In particular, producing the at least one micro-optical element on the testing circuit may contribute to san accurate alignment of the optical probe with the micro-optical component. For the terms "micro-optical element", "separate element" and "mechanical contact", reference can be made to the definitions above.

As generally used, the term "direct-write process" refers to a process in which a programmable beam, particularly selected from a photon beam or an electron beam, alters a solvability of a material, especially of a photoresist, in a manner that, after a development step, a desired structure is obtained. In a particularly preferred embodiment, a multi-photon absorption process of a material is used, preferably of acrylic material that is cross-linked upon irradiation, preferably by using a fs-laser and a negative-tone resist. By way of example, by laser irradiation the acrylic material is polymerized in a manner that it is less curable after the development step. Preferably, a light distribution may be spatially modified while irradiating the photoresist. More preferred, the spatial light distribution may be spatially modified by scanning a laser beam by using a galvo scanner, or by dynamically altering a photomask, especially by a spatial light modulator. Herein, the irradiation may alter the solubility of the photoresist. In particular, the photoresist may be liquid prior to irradiation, and may cured upon irradiation. Particularly preferred, two-photon polymerization or multi-photon polymerization may be used herein for curing of the photoresist; however using a different type of irradiation may also be feasible.

In a preferred embodiment, the micro-optical elements may be produced on the testing circuit, which may, preferably, be connected to a single-mode fiber array. In a further preferred embodiment, the testing circuit may be produced in the same wafer run as the micro-optical component or in the same production step of an interposer configured for coupling a further micro-optical component to an optical fiber. In this manner, arbitrarily complex pitch sequences matching different pitches of the testing circuit can be achieved. Additionally, time and effort required for producing an optical probe can be reduced in this manner, particularly since the testing circuit is available at the same point of time as the micro-optical component.

The fabrication of the micro-optical elements on testing circuits instead of fiber arrays exhibits various advantages in terms of reliability. Due to finite production accuracy of V-groove arrays and due to core-cladding non-concentricity and fixation inaccuracies, fiber arrays have a typical pitch accuracy of 0.5 µm, the sigma is typically at about 0.2 µm. For small mode-field diameters at micro-optical elements of typically 3 µm and less, larger coupling efficiency variations can occur if optical lenses may be aligned to the fiber core of fiber arrays. In contrast hereto, a photonic integrated circuit comprises a relatively perfect pitch having pitch accuracies of 50 nm or less, particularly since it is defined with lithographic precision. If the micro-optical element may be aligned to a coupling location of the testing circuit, producing optical probes having near-perfect pitches becomes possible. Although the fiber array may still have a pitch inaccuracy and the coupling variation may occur at the coupling location between the fiber-array and the testing circuit, the mode-field size may, however, be matched towards the fiber array connection facet to about 10 µm, thus, making the pitch inaccuracy of the fiber array less relevant, especially since pitch inaccuracies are smaller relative to the mode-field diameter of the optical fiber. In addition, the coupling efficiency variation between the fiber array and the testing circuit may be calibrated. Still further, the testing circuit may have integrated sensor elements, thereby avoiding the coupling to the fiber array.

In a preferred embodiment, the method may, further, comprise the following step:
(iii) detecting at least one marker within the testing circuit prior to step (ii);
(iv) producing at least one marker configured for alignment during step (ii).

As generally used, the term "marker" refers to a structure which is configured for alignment in at least one degree of freedom. Herein, the marker may be a structure, explicitly or implicitly, dedicated for this purpose, or it may be a functional element, especially selected from a waveguide or a ridge, of the testing circuit. A particular marker may already be comprised by the testing circuit during step (i), or it may be produced in the direct-write process during step (ii). In particular, the marker may facilitate the alignment between the probe head and the micro-optical component to optically couple light. In this manner an automated alignment between the probe head and the micro-optical component with respect to each other can be achieved.

In a further preferred embodiment, the method alternatively or in addition, further comprise at least one of the following steps:
(v) detecting the light being emitted from the testing circuit prior to step (ii); or
(vi) optically coupling the light into the testing circuit for detecting a coupling location prior to step (ii).

In a still further preferred embodiment, the method may, alternatively or in addition, further comprise at least one of the following steps:
(vii) fixing the testing circuit on a mechanical support prior to step (ii);
(viii) applying an adhesion promoter on the testing circuit prior to step (ii); or
(ix) aligning the micro-optical element with respect to a fiber core comprised by the testing circuit to a variation of at least 1 µm, preferably of at least 500 nm, preferably of at least 100 nm.

As generally used, the term "adhesion promoter" refers to a substance, which may be comprised by a photoresist, or may be applied separately, or to a process step, which is configured to treat a surface for increasing an adhesion of the surface, especially compared to not using an adhesion promoter. Preferably, the adhesion promoter may be selected from a functionalization of the surface, particularly a plasma treatment, or a silanization; a surface layer removal; an etching step; or a coating step, e.g. by using a material inherently having good adhesion, such as chromium. In a preferred embodiment, the adhesion promoter may be integrated in a photoresist by comprising an added substance known to enhance adhesion. However, using a different type of adhesion promoter may also be feasible.

According to the invention, the method further comprises the following step:
(x) calibrating the optical performance of the optical probe (1), preferably prior to step (ii).

For further details concerning the method for producing an optical probe, reference can be made to the disclosure of the optical probe as provided elsewhere herein.

In a further aspect, the present invention relates to a method for optical testing of at least one micro-optical component, in particular by using the optical probe as described elsewhere herein. The method comprises the following steps a) to c):
a) providing an optical probe, wherein the optical probe comprises a probe head, wherein an optical performance of the probe head is calibrated and at least one micro-optical element, wherein the probe head comprises a testing circuit, wherein the testing circuit is fixed on a mechanical support, and wherein the micro-optical element is a separate element with regard to the testing circuit and in mechanical contact with the testing circuit); and
b) positioning the probe head in a manner that the micro-optical element optically couples light between the testing circuit and the micro-optical component; and
c) determining an optical performance of the micro-optical component by measuring an optical signal being indicative for the optical performance of the micro-optical component.

Herein, the indicated steps may, preferably, be performed in the given order, commencing with step a) and finishing with step c). However, any or all of the indicated steps may also be repeated several times and/or preformed concurrently in part.

According to step a), an optical probe, preferably the optical probe as described elsewhere herein, is provided.

According to step b), the probe head is positioned in a manner that the micro-optical element optically couples light between the testing circuit and the micro-optical component.

According to step c), the optical performance of the micro-optical component is determined by measuring an optical signal being indicative for the optical performance of the micro-optical component.

According to the invention, the method for optical testing of the at least one micro-optical component further, comprises the following step:
d) calibrating the optical performance of the probe head, preferably prior to performing step (b); and preferably at least one of the following steps:
e) modifying the optical signal by using an optical phase array;
f) inserting at least one part of the micro-optical element into a trench comprised by the micro-optical component in a manner that the light is optically coupled between the testing circuit and the micro-optical component; or
g) matching a pitch of at least two micro-optical elements to a coupling location located at a surface of the micro-optical component by using the testing circuit.

For further details concerning the method for optical testing of at least one micro-optical component, in particular by using an optical probe, reference can be made to the disclosure of the optical probe as provided elsewhere herein.

With respect to the prior art, the optical probe and the related methods exhibits the following advantages. The optical probe can be configured for optical testing of components on die, batch, and wafer level. The optical probe may have a compact probe head that can be inserted and probe in a trench of a wafer, wherein the trench may, preferably, 250 µm or less, more preferred 100 µm or less, especially 80 µm or less. Further, the optical probe can be configured for a small pitch, preferably of 127 µm or less, more preferred of 80 µm or less, especially of 50 µm or less. Herein, having a high pitch accuracy of sigma = 300 nm or better and a low mode-field size variation of sigma = 10% or less is possible.

Further, the optical probe can be configured for a high port count, preferably at least 24, more preferred at least 64, especially at least 128. Preferably, a small mode-field, preferably of 10 µm or less, more preferred of 5 µm or less, especially twice an operation wavelength or less, may be available at a coupling location of the testing circuit. Further, a calibration of probe variations may be possible. The optical probe can be configured for robust probing even at high working distances. Preferably, the optical probe may implement one or more functionalities, such as distance measurement, local probing of polarization, multiplexing, modulation, spectral analysis, intensity and phase measurements, heterodyne detection and transmittance of signals. In addition, achieving a high testing throughput by parallelization, measurement of more than 1 channel or by switching involving no mechanical movements, is possible.

Further, the optical probe can be configured for working in the near ultraviolet range, the visual range, the near infrared range, and the medium infrared range, referring to a wavelength range of 100 nm to 10 µm, preferably of 200 nm to 4 µm, more preferred 400 nm to 2 µm, especially at least 1250 nm to 1650 nm. A high reproducibility of the optical coupling between the probe head and the at least one micro-optical component with variations of 0.5 dB or less, more preferred of 0.25 dB or less can be obtained.

In contrast to the present invention, WO 2023/132785A1 discloses contactless optical probing but does not mention 3D-printed structures with sub-micron precision, alignment markers, or calibration functionalities.

In further contrast to the present invention, US 2018/0143245 A1 discloses optical probe cards but lacks details on 3D-printed structures with sub-micron precision, alignment markers, and calibration functionalities.

In further contrast to the present invention, EP 4 001 980 A1 discloses 3D printing but not with a specific precision for achieving particular light propagation characteristics or the use of alignment markers and calibration functionalities.

As used herein, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

### Short description of the Figures

Further optional features and embodiments of the present invention are disclosed in more detail in the subsequent description of preferred embodiments, preferably in conjunction with the dependent claims. In the Figures:
- Figures 1 to 7: each illustrates an exemplary embodiment of an optical probe configured for optical testing of a micro-optical component;
- Figure 8: illustrates an exemplary embodiment of a marker;
- Figures 9 and 10: illustrate exemplary embodiments of a testing circuit;
- Figures 11 and 12: each illustrates further exemplary embodiments of the optical probe configured for optical testing of a micro-optical component;
- Figure 13: illustrates a facet view directed at a facet of a testing circuit;
- Figure 14: illustrates projections of the exemplary embodiment of the optical probe of Figure 2;
- Figure 15: illustrates a further exemplary embodiment of the optical probe configured for optical testing of micro-optical components;
- Figure 16: illustrates a method used for producing the probe head;
- Figure 17: illustrates a further exemplary embodiment of the optical probe configured for optical testing of a micro-optical component;
- Figure 18: illustrates experimental results obtained in a mode-field diameter statistics of 250 micro-optical elements; and
- Figures 19 and 20: each illustrates a further exemplary embodiment of the probe head.

### Detailed description of the embodiments

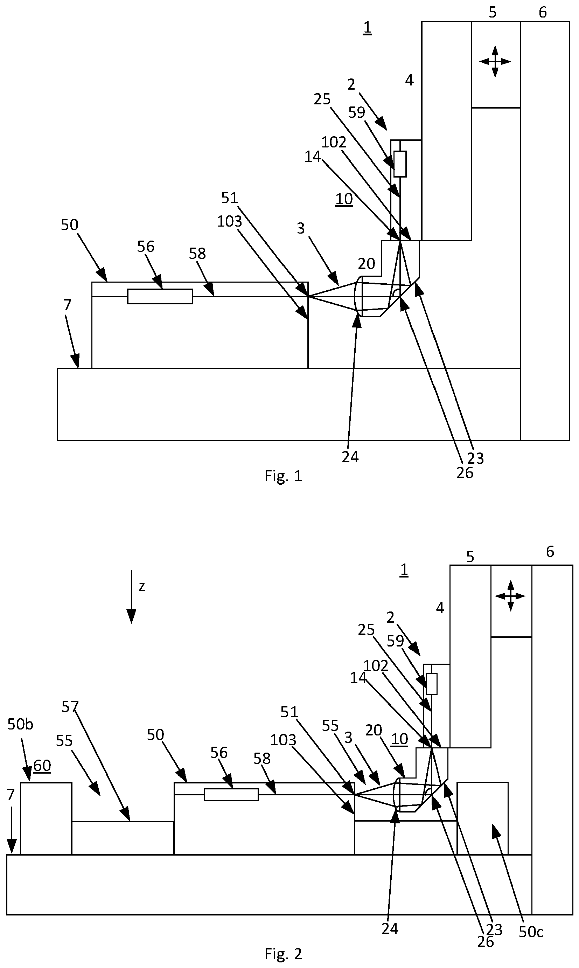

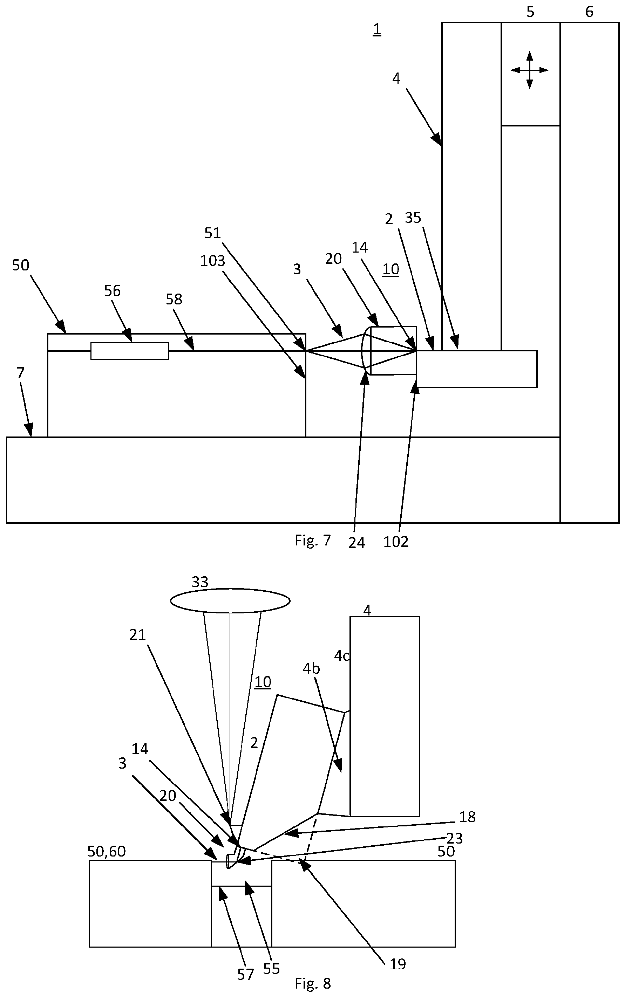

Figure 1 illustrates an exemplary embodiment of an optical probe 1 configured for optical testing of a micro-optical component 50. The optical probe 1 comprises a micro-optical element 20 configured for optically coupling light 3 between the micro-optical component 50 and a testing circuit 2 at coupling locations 51, 14, wherein the light 3 is transmitted through facets 103, 102, respectively. In the exemplary embodiment of Figure 1, the micro-optical element 20 is configured to redirect the light 3 in a 90° angle 26. As an alternative (not depicted here), the angle 26 may be a different angle ranging from typically 0 to 100°. Preferable values of the angle 26 may be 80° to 90°, ensuring that a total internal reflection (TIR) of the reflecting surface 23 may not fail. If the angle 26 differs from 90° (e.g. being 80°), than the probe head 10 may be tilted 10° clockwise, as shown in Fig. 8. The light 3 may travel from the testing circuit 2 to the micro-optical component 50, from the micro-optical component 50 to the testing circuit 2, or simultaneously in both directions. The micro-optic component 50 is fixed on a mechanical support, such as a chuck 7, either permanently or by using vacuum tools. In some embodiments, an optical functionality of a functional element 56, being part of the micro-optical component 50, e.g. waveguide, laser or photodiode, which may be coupled to a waveguide 58, may be characterized, e.g. an optical transmission properties of the waveguide 58 or a spot size converter at the coupling location of the micro-optical component 50.

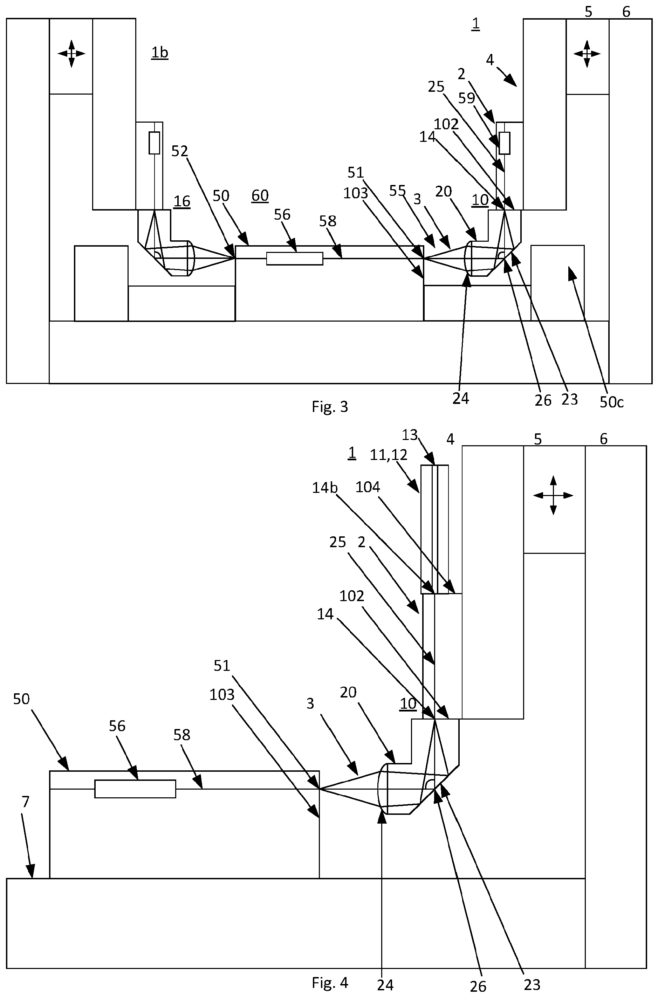

In the exemplary embodiment of Figure 1, a lens 24 and a planar mirror as the reflecting surface 23 are used, causing the total internal reflection. As an alternative (not depicted here), a planar surface and a curved mirror or a combination thereof may be used. To ensure total internal reflection, the refractive index n of the micro-optical element 20 should be at least 1.53. The reflecting surface 23 may be a metal coated mirror, especially to avoid a failure of the total internal reflection. The testing circuit 2 comprises at least one waveguide 25, wherein the waveguide 25 is configured to guide light to a functional element 59, e.g. a photodetector, or a polarization sensitive splitter having two photodetectors configured for analyzing polarization. As an alternative (not depicted here), the functional element 59 can also be a light source. In other embodiments, the testing circuit 2 may optically couple light to a fiber array (Figure 4) and, preferably, modify either a mode-field diameter (compared to an optical fiber 12) or a pitch of the waveguides (compared to a fiber array 11). This embodiment may, preferably, not comprise any functional element 59.

In the exemplary embodiment of Figure 1, the testing circuit 2 is mounted here on a fixture 4 or directly on the translation stage 5. The part of the optical probe 1 which is movable with respect to the micro-optical component 50 is considered as the probe head 10. All components are, preferably, designed as being rather dynamic in motion, thus lightweight. The translation stage 5 can, preferably, be configured to control six degrees of freedom and may, preferably, be rather dynamic to allow fast testing of various micro-optical components 50. The testing circuit 2 may generate, receive, or generate and receive a signal configured for probing of an optical performance of the micro-optical component 50 or a part thereof, in particular of the functional element 56, the waveguide 58, or the coupling location 51. The optical performance may also comprise information about a quality of the facet 103, the coupling location 51 and, particularly about a spot-size converter within the waveguide 58. The light 3 may be used to align the probe heads 10 with respect to the micro-optical component 50. The testing circuit 2 may also be configured to generate a signal indicating a proximity, a distance, a collision with regard to at least one object, in particular the micro-optical component 50 or the mechanical support 7. The signal may, especially be generated by using a LiDAR device, a mechanical detection mechanism, an interferometric device, or a capacitive signal; however, using a different device or mechanism may also be feasible. As further illustrated in Figure 1, the translation stage 5 is mounted to a mechanical support 6. The chuck 7 is a mounting device, on which the micro-optical component 50 may be temporarily or permanently fixed. Preferably, a wafer chuck having vacuum holes, wherein the micro-optical component 50 may be part of the wafer 60 may be used. Herein, the chuck 7 may be translated with respect to the optical probe 1.

Figure 2 illustrates a further exemplary embodiment of the optical probe 1 configured for the optical testing of the micro-optical components 50, 50b, 50c. As schematically depicted in Figure 2, the micro-optical component 50 is comprised here by a wafer 60. The wafer 60 may, in general, have a size of 6 inch (152 mm), preferably of 8 inch (203 mm), in particular of 12 inch (305 mm) or more, and may comprise at least 1000 micro-optical components, whereof the micro-optical components 50, 50b, 50c are, exemplarily, shown in Figure 2. Measuring optical signals that may be indicative for the optical performance of the micro-optical components 50, 50b can be performed in a trench 55, which may comprise dicing lanes for wafer singulation or may have been etched for a purpose of wafer level testing. Alternatively or in addition, V-Grooves for fiber alignment etched into the wafer 60 may be used for the optical testing. The chuck 7 and/or the translation stage 5 may be moved to sequentially scan at least a portion of the micro-optical components 50, 50b within the wafer 60.

Figure 3 illustrates a further exemplary embodiment of the optical probe 1 configured for the optical testing of the micro-optical component 50. As schematically depicted in Figure 3, a second probe 1b is, additionally, used here for the optical testing of a second coupling location 52 of the micro-optical component 50. This exemplary embodiment is configured for optically testing micro-optical component 50 having two or more coupling location 51, 52. The probe heads 10, 16 can be individually aligned to the micro-optical component 50. This exemplary embodiment can, especially, be used for micro-optical components 50 having two or more coupling location 51, 52 that may, preferably, be tested simultaneously. By way of example, such a micro-optical component 50 may be selected from a distributed feedback (DFB) laser, where no facet is reflecting but both facets (also a rear facet) are transmitting, or an amplifier, such as s semiconductor optical amplifier (SOA) or a gain material (such as erbium) doped integrated photonic chip. In a similar arrangement, at least one further micro-optical component 50, such as at least one of a micro-lens, an isolator, or a beam splitter cube, may be tested.

Figure 4 illustrates a further exemplary embodiment of the optical probe 1 configured for the optical testing of the micro-optical component 50. As schematically depicted in Figure 4, the testing circuit 2 is optically coupled here to a fiber array 11 at a second coupling location 14b of the testing circuit 2. This exemplary embodiment may be configured for a pitch conversion from the pitch of the fiber array 11 of typically 80 µm or 127 µm or 250 µm to a pitch below 80 µm, e.g. 25 µm. In addition to the pitch conversion, the testing circuit 2 may, further, be configured for re-shaping a mode. Herein, the testing circuit 2 may be based on a platform, preferably selected from ioNext, SiN, Triplex , Si rich glass, a photonic platform as produced in a lamination process, an ion diffusion platform, a platform structured in polymer or inscribed in glass. This embodiment may, particularly, be favorable for testing narrow pitches of less than 80 µm.

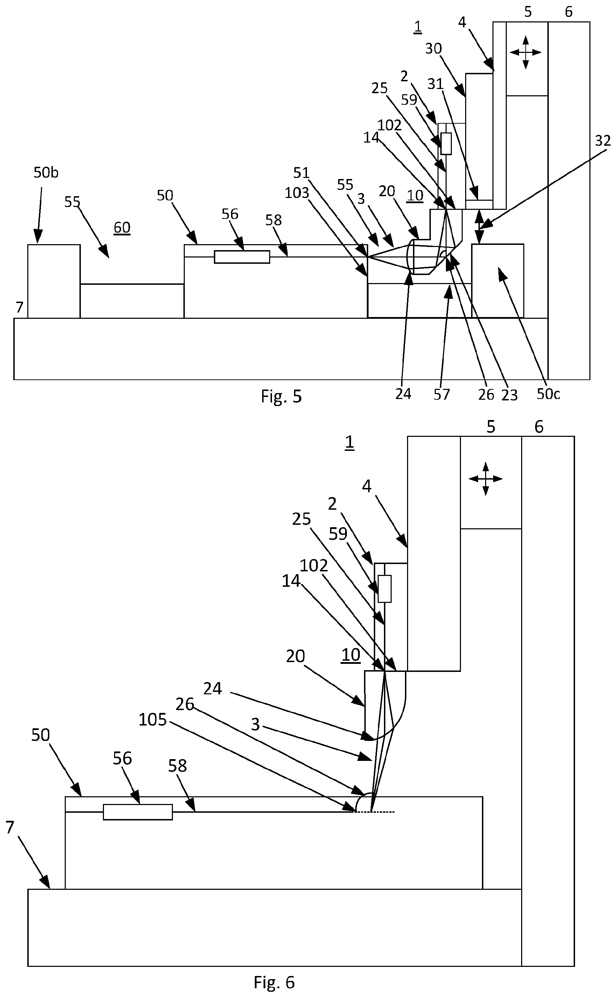

Figure 5 illustrates a further exemplary embodiment of the optical probe 1 configured for the optical testing of the micro-optical component 50. As schematically depicted in Figure 5, the testing circuit 2 is in mechanical contact with an electrical circuit 30. In particular, the testing circuit 2 may be a part of the electrical circuit 30, or the electrical circuit may be a part of the testing circuit 2, e.g. in that the testing circuit 2 may comprise at least one electrical functionality. This exemplary embodiment has a distance sensor 31 comprised by the electrical circuit 30, which in configured for measuring a distance 32 to the wafer 60. The distance sensor 31 may, alternatively or in addition, be configured of measuring a depth or a presence of the trench 55. The distance sensor 31 may, preferably, be selected from a capacitive sensor, an inductive sensor, or an optical sensor. In a further embodiment (not depicted here), the distance sensor 31 may be comprised by the testing circuit 2 without an electrical circuit 30, e.g. by generating a distance sensor signal to measure the distance 32 via an additional waveguide 25.

Figure 6 illustrates a further exemplary embodiment of the optical probe 1 configured for the optical testing of the micro-optical component 50. As schematically depicted in Figure 6, the optical probe 1 is configured for optically testing of a grating coupler 105, which emits in an angle 26, which may, typically, be 95° to 115°, often 100°. Herein, the refractive surface 24 may be implemented in a manner that it may deflect light in a 10° angle from a surface normal to match the light emission 3 with the grating coupler 105, particularly to achieve a high optical coupling to the micro-optical component 50. In addition, the angle 26 can be fine-adjusted by the translation stage 5. In a further embodiment, the refractive surface 24 may be an optical lens emitting in a direction along the waveguide 25, while the complete probe head 10 may be tilted by an angle 26 minus 90°, typically between 0 and 20°, preferably 10°, see Figure 8. Such a kind of tilting may, preferably, implemented by using a part 4b of the fixture and the micro-optical element 20, fine-adjusted by using the translation stage 5.

Figure 7 illustrates a further exemplary embodiment of the optical probe 1 configured for the optical testing of the micro-optical component 50. As schematically depicted in Figure 7, the testing circuit 2 is or comprises a light source or a light source array, particularly selected from a laser, a laser bar, an optical amplifier (SOA), or a superluminescent light emitting diode (SLED). While the testing circuit 2 may be operated, the coupling performance may be measured by using the functional element 56, which may be an optical device, especially a photodiode. As an alternative (not depicted here), the optical coupling may be measured by using a further optical element, preferably an optical fiber coupled to the micro-optical component 50, the second probe head 6, a grating coupling coupled to the waveguide 58 and a camera. The facet 103 may, further, be equipped with an optical lens. The testing circuit 2 may be fixed by a vacuum gripper to the mechanical support 4 or permanently, e.g. by using an adhesive or an adhesion promoter.

Figure 8 illustrates an exemplary embodiment of the 3D-printed marker 21. The marker 21 may, preferably, be produced in the same printing process as the micro-optical element 20 and may be well aligned, particularly at least to 10 µm, preferably to 5 µm, especially to 1 µm, to both the micro-optical element 20 and the coupling location 14. The marker 21 may be visible in a field of view of a top-view camera 33, which may for configured to provide a simplified alignment of the probe head 10 to the micro-optical component 50, especially the wafer 60, and to the trench 55. To avoid a blocking of a vision of the top-view camera 33 on the marker 21, the mechanical fixture 4 has a part 4b which is configured to fix the testing circuit 2 at a certain angle. The angle may, preferably, be 5° to 15° compared to a surface normal. To avoid mechanical contact of the testing circuit 2 with the surface of the wafer 60, the exemplary testing circuit 2 as shown in Figure 8 comprises a chamfer 18. A region of the chamfer 18 is indicated here by a dashed line. Without the chamfer 18, a mechanical contact could occur at position assumed by the chamfer 18, which would destroy at least a portion of the micro-optical component 50, especially the wafer 60. Furthermore, the micro-optical element 20 is arranged here in a manner that the light 3 is emitted horizontally to the surface of the micro-optical component 50, especially of the wafer 60. This arrangement can be achieved by tilting the reflecting surface 23.

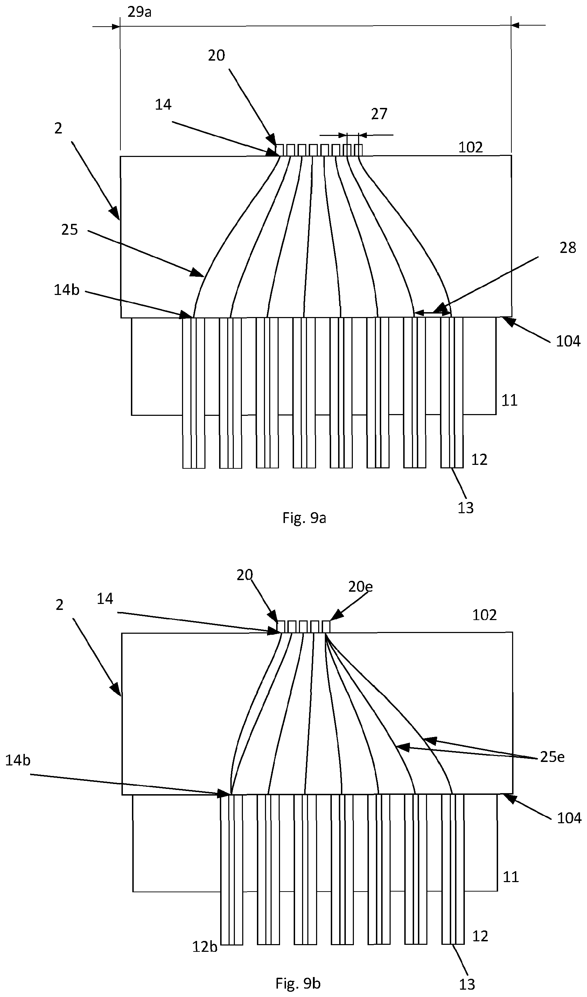

Figure 9 illustrates exemplary embodiments of the testing circuit 2 connected to a fiber array 11. As schematically depicted in Figures 9a and 9b, the testing circuit 2 is configured to translate a pitch 28 at the facet of the testing circuit 2 of typically 80 µm or 127 µm or 250 µm to a pitch 27 of the coupling location of the testing circuit 2 being typically below 80 µm. For this purpose, a plurality of optical fibers 12 is connected to the single micro-optical element 20. However, in some embodiments, the pitch 27 may be 80 µm or more. This may, particularly, be favorable if
- an extremely constant pitch may be needed, as the accuracy of the pitch 27 is better than the accuracy of the pitch 28, wherein, in this case, the coupling loss at the second coupling location 14b of the testing circuit 2 may be calibrated;
- an irregular pitch may be desired, e.g. a first pitch of 127 µm alternating with a second pitch of 350 µm; or
- at least one additional functionality within the testing circuit 2 may be desired, such as a polarization splitting.

In this embodiment, the pitch may also be 80 µm or less.

Herein, the waveguides 25 as well as the fiber cores 13 may be polarization maintaining. Further, the width 29a may range from 2 µm to 10 mm, preferably being 2 mm or less. In the exemplary embodiment of Figure 9a each individual waveguide 25 is coupled to a separate channel in the micro-optical element 20, while in the exemplary embodiment of Figure 9b more than one waveguide 25e is concurrently coupled into a single channel and coupled to a single element 20e in the micro-optical element 20. Further, multiplexing may be implemented by connecting several micro-optical elements 20 to a single optical fiber 12b.

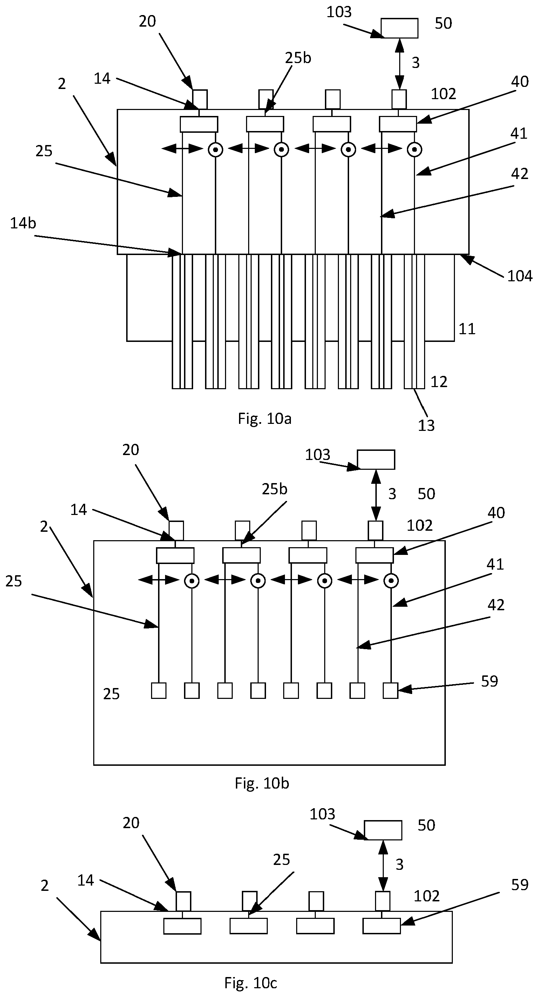

Figure 10 illustrates further exemplary embodiments of the testing circuit 2. In the exemplary embodiment of Figure 10a, a polarization splitter 40 is configured to split light of orthogonal E-vectors into two polarization channels 41, 42, which are coupled to the two optical fibers 12. The waveguide 25b is configured here it a manner that it does not change a polarization between a facet 102 of the testing circuit 2 and the polarization splitter 40. This advantage can, in particular, be achieved by a straight, birefringing or short waveguide. Further, the micro-optical element 20 is configured here it a manner that not to change a polarization between a facet 103 of the micro-optical component 50 and the facet 102 of the testing circuit 2. This advantage can, in particular, be achieved by providing the micro-optical element 20 as an optical lens without reflecting surfaces or by ensuring that light may be impinging on reflecting surfaces 23 in a manner that there no alteration of phase or intensity between different polarization components may occur, which may be the case for light of which the E-field is either in the reflection plane or perpendicular to the reflection plane. The reflection plane is a plane defined by incoming and reflected light at a planar surface. Alternatively, the alteration of the polarization of a reflective surface may be accounted for numerically, especially by using Fresnel equation, a calibration or a training measurement. In a further embodiment, the complete Müller Matrix can be determined by measuring both phase and intensity of the two polarization channels 41, 42. Further, the polarization of at least a portion of light within two polarization channels 41, 42 may be rotated by 90° and interfered at a detector with each other.

In the exemplary embodiment of Figure 10b, light of the two polarization channels 41, 42 is coupled to the functional element 59, which may especially be a waveguide integrated photodiode. Optionally, the polarization of the light may be rotated by 90° or by a different angle prior to coupling into a fiber or a functional element 59, especially a photodetector.

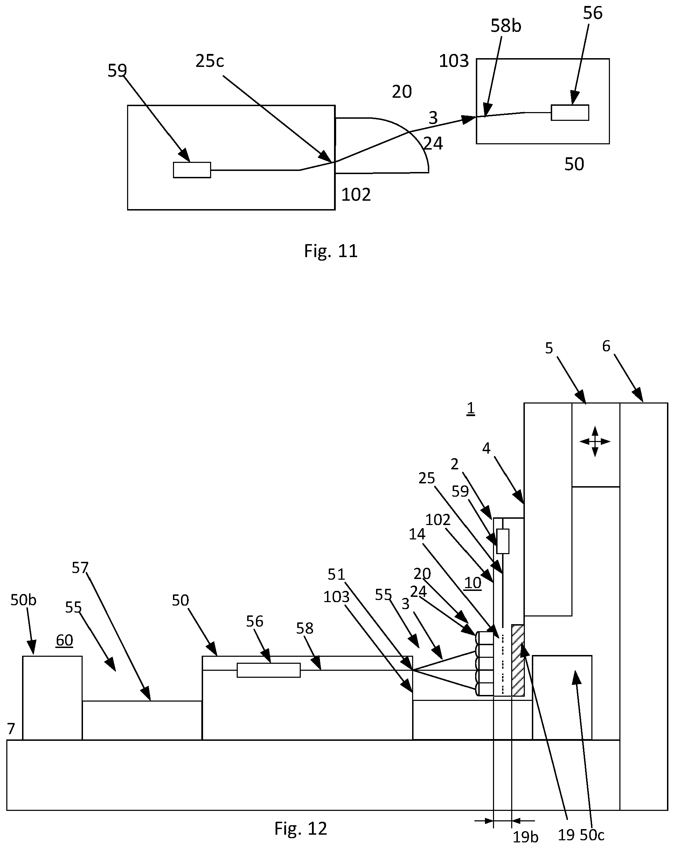

In the exemplary embodiment of Figure 10c, light is coupled to the functional elements 59. Herein, the functional elements 59 are configured for testing properties of the micro-optical component 50 either by transmitting or receiving or by receiving and transmitting light at the same time. In particular, the functional elements 59 may be selected from at least one of a photodiode, especially PIN, PN, or APD; a waveguide integrated photodiode; an IQ-receiver; a beam combiner; an optical modulator; a light source, especially a laser or an SLED; an amplifier, especially an SOA; an IQ modulator; an intensity modulator; a polarization splitter; a polarization stripper; a polarization filter, especially a rating coupler; or a polarization rotator. Herein, the waveguides 25 may be single-mode or multimode. Further, the waveguides 25 may be arranged at an angle ≠ 0° to the facet 102 of the testing circuit 2, in particular to reduce reflections. Further, the micro-optical element 20 may have only angled surfaces with respect to the light propagation, in particular to avoid back-reflections, see Figure 11. The functional elements 59, in particular the IQ receiver or the beam combiner, may be used to measure the phase of two light beams relative to each other and may be used as feedback signal to trim the waveguide 58.

Figure 11 illustrates a further exemplary embodiment of the optical probe 1 configured for the optical testing of the micro-optical component 50. Herein, the waveguides 25c, 58b are configured not to be normal to the surfaces of the facets 102, 103, respectively. The refractive surface 24 of the micro-optical element 20 deflects the light 3 in a manner that it may couple well between the waveguides 25c, 58b. For this purpose, the refractive surface 24 of the micro-optical element 20 may have no optically effective surfaces which are perpendicular to the beam propagation direction of the light 3. This embodiment may be favorable, particularly since it may suppress back-reflection due to the angled surfaces. In a further embodiment (not depicted here), it may be favorable that the reflecting surface 23 may also have no surfaces perpendicular to the propagation direction of the light 3. In a still further embodiment (not depicted here), an optical isolator and/or an additional anti-reflective coating may be used on at least one of the facets 102, 103 or on the refractive surface 24 of the micro-optical element 20.

Figure 12 illustrates a further exemplary embodiment of the optical probe 1 configured for the optical testing of the micro-optical components 50, 50b, 50c. As schematically depicted in Figure 12, the testing circuit 2 has a large number of coupling locations 14. Herein, several or all coupling locations 14 are equipped with one or more micro-optical elements 20. Each coupling location 14 may be selected from a grating coupler, a photodetector, an adiabatic taper, an etched facet, an etched facet in an angle of 30 to 120° with respect to the surface normal of the facet 102, or a VCSEL array. In case of a coupling location 14 emitting light or receiving light being predominantly perpendicular to the facet 102 only to a small extent, the micro-optical element 20 may be or comprise a refractive surface 24 that may be shaped in a manner as schematically shown in Figure 6 that the light 3 being perpendicular to the facet 102 may be received to a large extent. As an alternative, the probe head 10 may be designed to have a minimum or a maximum alteration of sensitivity with respect to the amount of the light 3 coupled into the coupling location 14 by either using a high-NA lens or a low-NA lens as the refractive surface 24, wherein NA denotes a "numerical aperture". This embodiment can be used for measuring a spatial and/or angular distribution of the light 3. The light 3 may be either come from the micro-optical component 50, then the coupling location 14 may receive the light 3, or the light 3 may be transmitted into the micro-optical component 50, then the coupling location 14 may emit the light 3. The probe head 10 may function as a Shack-Hartmann sensor, in particular by measuring at least one of a propagation direction or an intensity of the light 3. During a measurement, the probe head 10 may be moved according to a programmed pattern for sub-sampling, in particular by measuring the light 3 at more locations than micro-optical element 20 are present. In a preferred embodiment, at least a region 19 may be removed, especially by thinning, etching, or milling, for fitting the probe head 10 into smaller trenches 55. As an alternative, a thin testing circuit 2 having a thickness 19b, preferably of 730 µm or less, more preferred of 100 µm or less, over the complete component or at least in the region 19. In further preferred embodiment, a thin substrate, especially prepared by using a direct bandgap semiconductor, may be used.

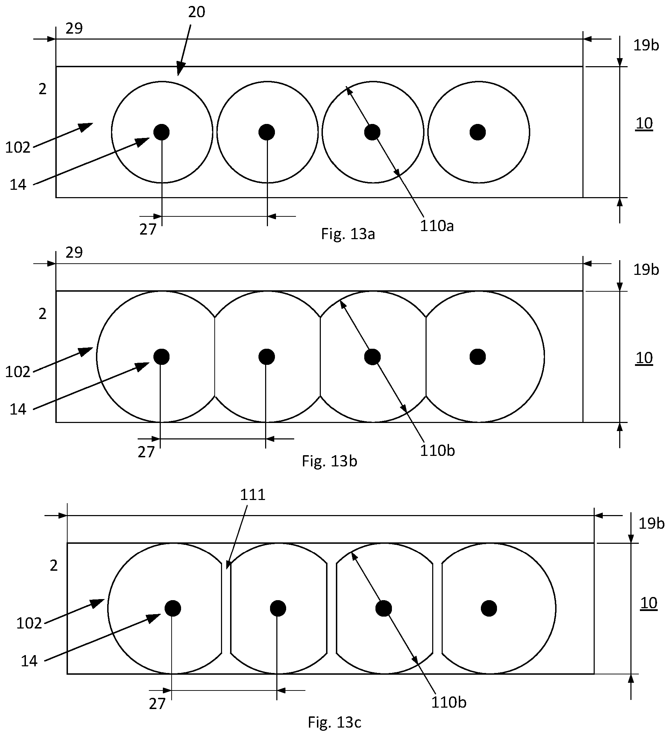

Figure 13 illustrates a facet view directed at the facet 102 of a testing circuit 2. As schematically depicted in Figure 13a, each micro-optical element 20 has a preferable diameter 110a. As schematically depicted in Figure 13b, each micro-optical element 20 has a diameter 110b, wherein adjacent micro-optical elements 20 are intersecting. As schematically depicted in Figure 13c, each micro-optical element 20 has a diameter 110b, wherein adjacent micro-optical elements 20 are separated by leaving a gap 111. The gap 111 may be advantageous for mechanically decoupling the adjacent micro-optical elements 20 which is preferable for a higher reliability of the probe head 10.

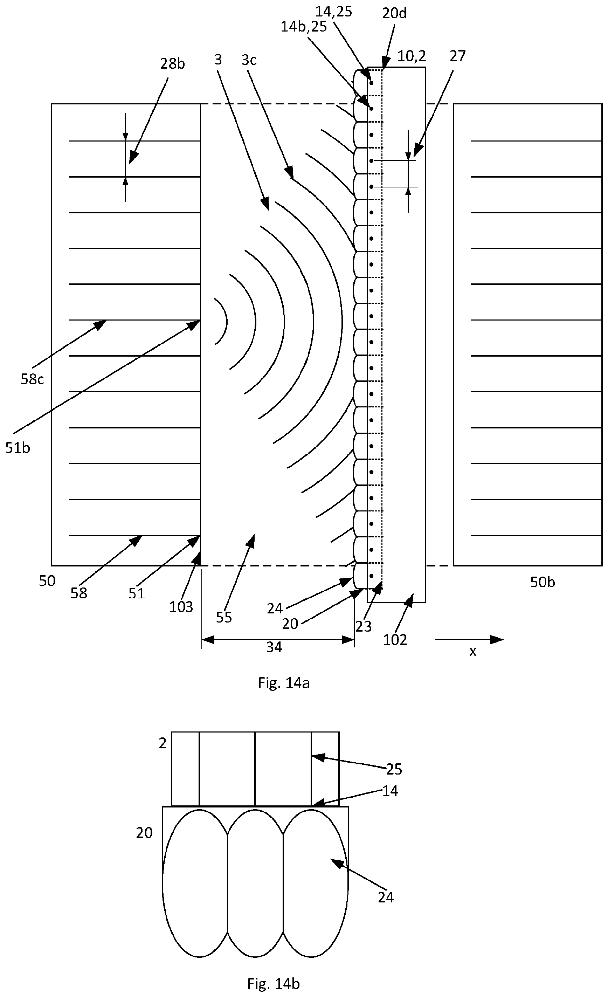

Figure 14a illustrates the further exemplary embodiment of the optical probe 1 in a projection direction along +z according to Figure 2. Dashed lines indicate part of elements of the drawing that are not visible since they are covered by another element. As schematically depicted in Figure 14a, the micro-optical component 50 comprises waveguides 58, each having a pitch 28b. In a preferred embodiment, the pitch 28b may be 30 µm or less. Providing a probe having a pitch 27 that may match pitch 28b would, however, lead to rather small micro-optical element 20, leading to a short working distance 34 or to poor coupling between the coupling locations 14, 51 due to the rather too small micro-optical elements 20. Instead of coupling opposing coupling locations 14, 51, a plurality of coupling locations 14 couple with, preferably, at least one waveguide 58c at a coupling location 51b in the embodiment of Figure 14a. This arrangement can be achieved by interfering light originating from the plurality of coupling locations 14, wherein the light has a phase that is adjusted in a manner that the light constructively interferes at the coupling location 51b such that the mode-field generated at the coupling location 51b, preferably, corresponds to the mode field that couples best into the coupling location 51b. The mode-field coupling best into the coupling location 51b is the mode-field that corresponds to the coupling location 51b as much as possible in intensity distribution and phase distribution. To generate such a mode-field the phase and amplitude of the light emitted by the coupling locations 14 is adjusted in a manner that a concentric wave-front is generated in the center of the coupling location 51b. Additionally, the coupling sites 14 that are further away from the coupling location 51b may be reduced in intensity to generate an appropriate mode-field size. This principle as used in the embodiment of Figure 14a can be referred to as "optical phase array". The appropriate phase may be adjusted by cascade phase shifters within the testing circuit 2. The phase shifters may be operated by changing the refractive index controlling the phase and/or intensity of the light, especially by using at least one of heat, a current injection into a semiconductor junction, a piezo electric element, a voltage applied to a material that changes its refractive index upon an electric field, or a silicon-organic hybrid modulator. The optical phase array is configured for addressing the plurality of the coupling locations 51b without mechanical movement. It is also possible to determine the mode-field distribution at the coupling locations 51b by alternating the mode-field distribution in a manner that the coupling may be maximal or by adjusting the light 3 to an appropriate test light distribution, in particular a very small or large mode-field, or a mode-field that may be scanned along the facet 103 while the coupling of the light 3 may be monitored, such that the mode-field at the coupling locations 51b can be determined, especially by using a deconvolution. The micro-optical elements 20 may be further configured for enabling light propagating, preferably from every coupling location 14 to every coupling location 51. This can, particularly, be achieved by designing individual micro-optical elements 20 having a high NA in the drawing plane of Figure 14a. In summary, by using the exemplary embodiment of the optical probe 1 according to Figure 14a it is possible to probe a large number of coupling locations 14, in particular more than 100, having a small pitch, especially of 30 µm or less, in a fast time, preferably within 100 ms or less per connection, by using a large working distance, especially of 30 µm or more, under adjustment of the incident angle in the drawing plane of Figure 14a. Alternatively or in addition, a plurality of mode-fields may be generated, in particular for allowing to probe components having a highly irregular pitch 28b or for using a single probe head 10 for probing various different micro-optical components 50.

Figure 14b illustrates the further exemplary embodiment of the optical probe 1 in an observation projection direction along +x according to Figure 14. Herein, each refractive surface 24 of the coupling locations 14 are elongated along the waveguide 25 in a manner that the light can be well-focused in the out-of-plane direction of Figure 14b. Preferably, the each coupling location 14 is as high as a distance of the simultaneously emitting elements in Figure 14, or such that each refractive surface 24 is at least capturing 50 %, preferably 90 % of an emission of the light distribution emitted by the coupling location 51 in an out-of-plane direction according to Figure 14b.

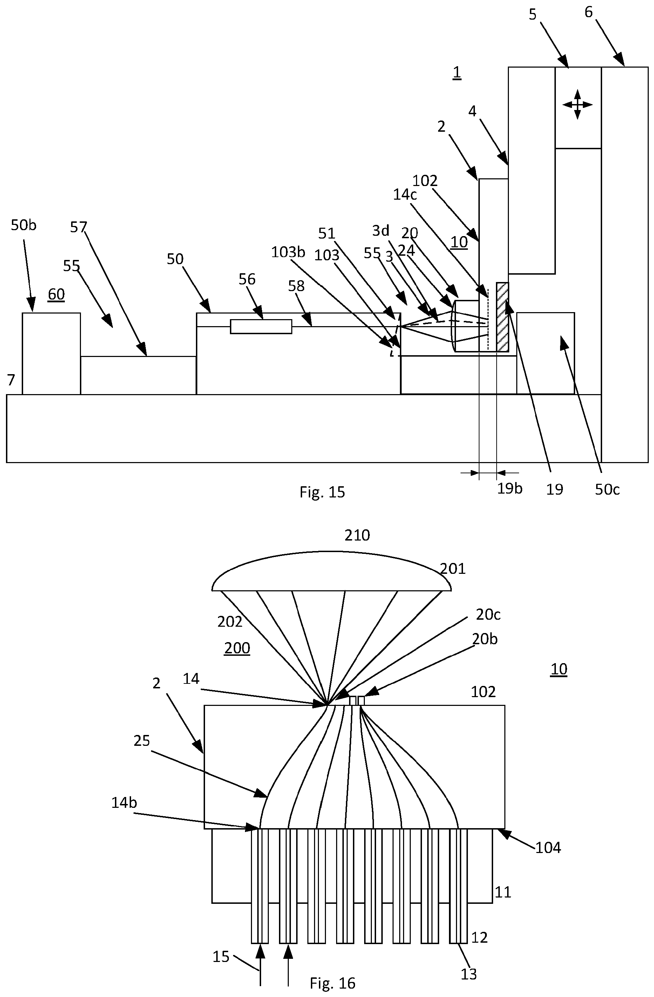

Figure 15 illustrates a further exemplary embodiment of the optical probe 1 configured for the optical testing of the micro-optical components 50, 50b, 50c. As schematically depicted in Figure 15, the testing circuit 2 has a position sensitive device 14c. In combination with the refractive surface 24, the position sensitive device 14c can detect the tilt angle of a facet 103b, dashed line, and can distinguish the tilt angle of the facet 103b from a straight facet 103. This procedures can identify facets that are not perpendicular, which is a common fabrication deviation. The optical probe 1 is configured to detect the tilted facet 103b by detecting light propagating along a center ray 3d. For this purpose, the position sensitive device 14c may, preferably, be located in or close to a Fourier plane of the center ray 3d, which causes the center of the light distribution to be displaced on the position sensitive device 14c depending on an orientation of the tilted facet 103b. In an alternative embodiment (not depicted here), the position sensitive device 14c may be located in the image plane for imaging the coupling location 51.

Figure 16 illustrates a method for producing the probe head 10. An objective lens 201 generates a laser beam 202 configured for curing a photoresist 200. As an alternative, the solubility of the photoresist 200 may be changed by the irradiation of the laser beam 202. By scanning the laser beam 202 in three dimensions, the structures 20b constituting a micro-optical element are produced. For aligning a further structure 20c constituting a further micro-optical element to the coupling location 14, light 15 may be coupled into the testing circuit 2. The light 15 is chosen in a manner that it may be transmitted by the waveguides 25. The lithography system 210 has a detector configured to detect the position of light 15 exciting the testing circuit 2 through coupling locations 14. The detector may be a CCD camera, or a confocal detector. Alternatively, the laser beam 202 may be coupled to the probe head 10 through the coupling locations 14 and is detected at the fiber core 13 or by a detector within the testing circuit 2 coupled to the probe head 10. As a further alternative, a feature within the testing circuit 2, especially the waveguide 25 or the marker 21 (not depicted here), may be used for the alignment. For this purpose, light of the laser beam 202 coupling into the waveguides 25 and being reflected at a feature within waveguide 25, such as the facet 104 or at the fiber core 13, may be detected.

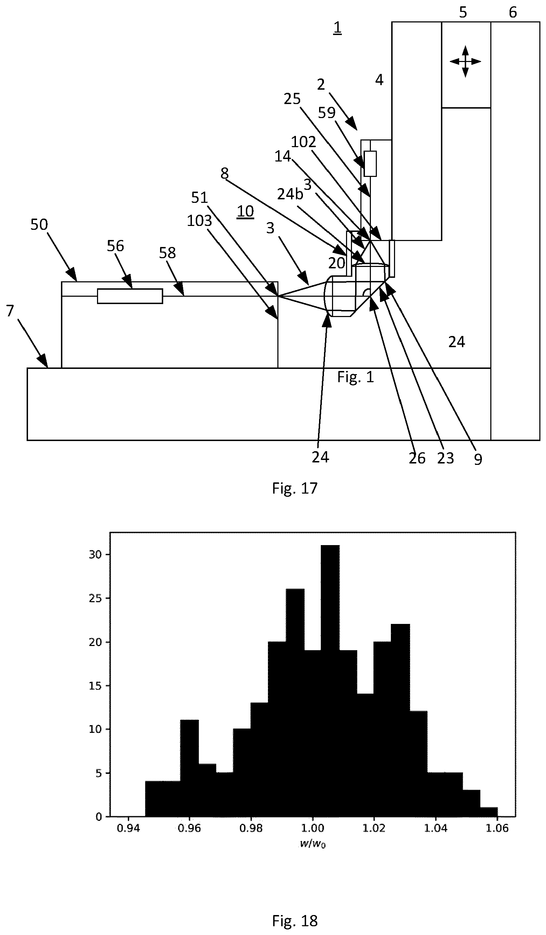

Figure 17 illustrates a further exemplary embodiment of the optical probe 1 configured for the optical testing of the micro-optical component 50. As schematically depicted in Figure 17, the micro-optical element 20 has a mechanical support 8 configured for providing a certain distance, especially 5 µm to 250 µm, between the refractive surface 24 and the facet 102. Instead of using a mechanical support 8 in form of pillars, the micro-optical element 20 may also be attached to the fixture 4 for the testing circuit 2, in this case, the fixture 4 may, preferably, be arranged in a manner that it is not flush with the facet 102 but protrudes from the facet 102. The refractive surface 24b, here implemented as an optical lens, can reduce a divergence of then light 3 to avoid failure of total internal reflection at the region 9. Additionally, the angle 26 may exceed 90° to mitigate failure of the total internal reflection. Alternatively or in addition to the refractive surface 24b, the testing circuit 2 may have at least one optical 3D-printed element, preferably an on-chip mode-field converter, configured to reduce the divergence of the light 3, which is fabricated close to facet 102. This embodiment according to Figure 17 may be favorable, if the divergent light 3e emitted or collected by the pitch at the facet 103b may be more divergent than light emitted by a standard single mode fiber, such as the single mode fiber 28.

Figure 18 illustrates experimental results obtained in a mode-field diameter statistics of 250 micro-optical elements 20, which were implemented as optical lenses. Herein, a mode-field diameter *W* is normalized to a design mode field *w*₀. A relative mode-field diameter of e.g. 1.04 would imply a mode-field that is 4 % larger than designed, e.g. w = 10.4 µm instead of w0 = 10 µm. Hereby, a standard deviation of 2 % could be achieved.

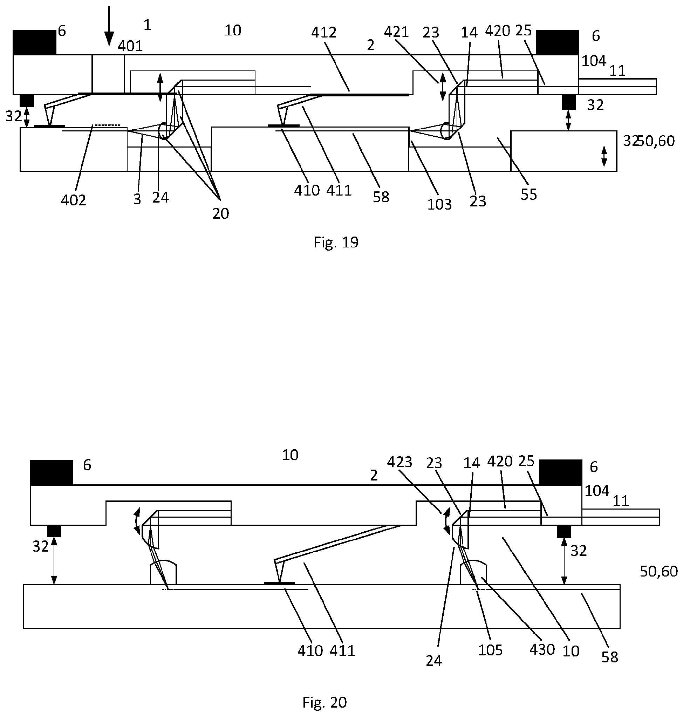

Figure 19 illustrates a further exemplary embodiment, in which the probe head 10 comprises a probe-card made out of a printed circuit board (PCB), a wafer, or a planar light wave circuit (PLC) comprising both electrical cantilevers 411 and electrical transmission line 412 as well as a micro-electrical mechanical system (MEMS) actuator 420 having an optical waveguide. Preferably, a hole or a via 401 may allow aligning the probe head 10 to the micro-optical component 50 by observing a fiducial 402. By using the probe card which comprises optical, electrical and mechanical functionalities, the electrical cantilever 411 can, in an initial contact step, be aligned with the electrical contact pad 410 of the wafer 60. After the contact step, the micro-optical element 20 can be aligned by using the MEMS actuator 420 to couple the light 3. In particular, the MEMS actuator 420 can move the micro-optical element 20 by at least 1 µm, preferably by at least 10 µm, especially by at least 25 µm or more. In other embodiments, a plurality of cantilevers 411 and a plurality of micro-optical elements 20, in some embodiments at least 1000, may be present. The PLC may further comprise optical switches, optical splitters, or optical detectors. The PLC may be connected to the optical probe 1 either electrically or by using the fiber array 11. The optical probe 1 may, additionally, comprise the distance sensor 31, which is configured to measure the distance 32 between the distance sensor 31 and a surface of the wafer 60. The distance sensor 31 may, preferably be selected from at least one of an optical sensor or a capacitive sensor.

Figure 20 illustrates a further exemplary embodiment, in which the probe head 10 is configured to test a functionality of a beam-shaping element 430, in particular an emission direction. For this purpose, the MEMS actuator 420 may be configured to provide at least one of a rotation or a translation of the micro-optical element 20. In this embodiment, the micro-optical element 20 is configured to redirect the light 3 to an angle that allows coupling it into the grating coupler 105. The reflecting surface 23 is also configured to redirect the light from the waveguide 25 towards the surface of the wafer 60.

### List of Reference Signs

- 1, 1b: Optical probe
- 2: Testing circuit
- 3: Light coupled between testing circuit and micro-optical component
- 3b: Light coupled between grating coupler and micro-optical component
- 3c: Phase front of light coupled between testing circuit and micro-optical component
- 3d: Beam path in case of facet
- 3e: Divergent light emitted or collected by pitch at facet
- 4: Fixture for testing circuit
- 4b: Part of fixture for testing circuit configured for mounting testing circuit at an angle compared to being directly mounted on the surface
- 4c: Surface, being part of the fixture for testing circuit essentially vertical to the surface of wafer
- 5: Translation stage, typically 6 degrees of freedom
- 6: Mechanical support, carrier
- 7: Mechanical support for micro-optical component and wafer, chuck
- 8: Mechanical support, being part of micro-optical element
- 9: Region in which total internal reflection may fail without refractive surface reducing divergence of light coupled between testing circuit and micro-optical component
- 10: Probe head
- 11: Fiber array
- 12: Optical fiber
- 12b: Optical fiber
- 13: Fiber core
- 14: Coupling location of testing circuit
- 14b: Second coupling location of testing circuit
- 14c: Position sensitive device, such as a PSD, CCD, CMOS or image sensor
- 15: Light coupled into probe head
- 16: Second probe head
- 18: Chamfer in testing circuit
- 19: Thinned, etched, milled or thin region in testing circuit
- 19b: Resulting thickness of testing circuit after removal of thinned region in testing circuit
- 20: Micro-optical element
- 20b: Micro-optical element just fabricated
- 20c: Micro-optical element being fabricated
- 20d: Micro-optical element being behind testing circuit from the observation direction
- 20e: Single element of micro-optical element
- 21: (3D-printed) marker
- 23: Reflecting surface e.g. a total-internal reflection mirror
- 24: Refractive surface (optical lens)
- 24b: Refractive surface reducing divergence of light coupled between testing circuit and micro-optical component
- 25: Optical waveguide, being part of testing circuit
- 25b: Optical waveguide configured to preserve polarization, e.g. by being short, straight or birefringing or a combination thereof
- 25c: Angled waveguide, not being normal to facet of testing circuit configured for attaching micro-optical element
- 25e: Optical waveguide, being part of testing circuit
- 26, 26b: Angle
- 27: Pitch of coupling location of testing circuit at facet of testing circuit
- 28: Pitch at facet of testing circuit which facet is configured for attaching micro-optical component
- 28b: Pitch at facet of micro-optical component
- 29a: Width of testing circuit, may extend over testing circuit or only extends over a region configured for being inserted in trench etched into wafer or cavity
- 29b: Thickness of light coupled between testing circuit and micro-optical component, may extend over testing circuit or only extends over a region intended to be inserted in trench etched into wafer or a cavity
- 30: Electrical circuit
- 31: Distance sensor
- 32: Distance between distance sensor and surface of wafer
- 33: Top-view camera
- 34: Free working distance
- 35: Vacuum tool or permanent fixture
- 40: Polarization Splitter
- 41: Polarization channel "TM"
- 42: Polarization channel "TE"
- 50: Micro-optical component
- 50b,c: Further micro-optical component, there may be thousands per wafer
- 51, 52: Coupling location of micro-optical component
- 51b: Coupling location of micro-optical component being currently addressed
- 55: Trench etched into wafer
- 56: Functional element, being part of micro-optical component, e.g. waveguide, laser or photodiode
- 57: Bottom of deep etch
- 58: Waveguide, being part of micro-optical component
- 58b: Angled waveguide not normal to tilted facet of micro-optical component
- 58c: Waveguide being currently addressed by light coupled between testing circuit and micro-optical component, i.e. light currently coupled from waveguide to probe head, or vice versa
- 59: Functional element part of testing circuit, e.g. photodetector or light source
- 60: Wafer
- 102: Facet of testing circuit configured for attaching micro-optical element
- 103: Facet of micro-optical component
- 103b: Tilted facet of micro-optical component
- 104: Facet of testing circuit which facet is configured for attaching micro-optical component
- 105: Grating coupler
- 110a: Diameter of a micro-optical element, being smaller or equal than pitch of coupling location of testing circuit at facet of testing circuit
- 110b: Diameter of a micro-optical element, being larger than pitch of coupling location of testing circuit at facet of testing circuit
- 111: Gap between micro-optical elements having diameter 110b
- 200: (Liquid) photoresist
- 201: Objective lens for fabrication of micro-optical elements
- 202: Laser beam of objective lens
- 210: Lithography system
- 401: Hole or via, configured to allow observing fiducial in arrow direction
- 402: Fiducial, part of micro-optical component
- 410: Electrical contact pad, part of micro-optical component
- 411: Electrical cantilever, part of probe head
- 412: Electrical transmission line, part of probe head
- 420: MEMS actuator comprising a waveguide, part of probe head
- 421: Movement direction of MEMS actuator
- 423: Direction of rotation provided by MEMS actuator
- 430: Beam-shaping element

## Claims

1. An optical probe (1) configured for optical testing of at least one micro-optical component (50), comprising,
- a probe head (10), wherein an optical performance of the probe head (10) is calibrated and wherein the probe head (10) comprises a testing circuit (2), wherein the testing circuit (2) is fixable on a mechanical support;
- at least one micro-optical element (20), wherein the micro-optical element (20) is a separate element with regard to the testing circuit (2) and in mechanical contact with the testing circuit (2),
wherein the micro-optical element (20) is configured to optically couple light between the testing circuit (2) and the micro-optical component (50), wherein the micro-optical element (20) has an alignment accuracy of at least 1000 nm with respect to a coupling location (14, 14b) at the testing circuit (2), thereby being configured to determine an optical performance of the micro-optical component (50).

2. The optical probe according to the preceding claim, wherein the micro-optical element (20) comprises a photoresist produced on the testing circuit (2).

3. The optical probe according to any one of the preceding claims, wherein the testing circuit (2) is configured to be coupled to a fiber array (11).

4. The optical probe according to the preceding claim, wherein the testing circuit (2) is configured to modify either a pitch or a mode-field diameter of the fiber array (11).

5. The optical probe according to any one of the preceding claims, wherein the testing circuit (2) has at least one of:
- a mechanical functionality;
- an electrical functionality;
- an optical functionality, wherein the optical functionality is independent from the optical functionality of the micro-optical element (20).

6. The optical probe according to any one of the preceding claims, wherein the testing circuit (2) comprises at least one of:
- a photodetector;
- a light source;
- an optical modulator;
- a spectrum analyzer;
- a power splitter;
- a polarization splitter, filter or stripper;
- a multiplexer.

7. The optical probe according to any one of the preceding claims, wherein a pitch of the testing circuit (2) is 80 µm or less.

8. The optical probe according to any one of the preceding claims, wherein a mode-field pitch of the micro-optical element (20) varies 1000 nm or less.

9. The optical probe according to any one of the preceding claims, wherein a standard deviation of a variation of a mode-field diameter is 20 % or less of an average mode-field.

10. The optical probe according to any one of the preceding claims, wherein the probe head (10) is configured to function as an optical phase array.

11. A method for producing an optical probe (1) configured for optical testing of at least one micro-optical component (50), in particular the optical probe (1) according to any one of the preceding claims, the method comprising the following steps:
(i) providing a probe head (10), wherein an optical performance of the probe head (10) is calibrated and wherein the probe head (10) comprises a testing circuit (2), wherein the testing circuit (2) is fixed on a mechanical support (6); and
(ii) producing at least one micro-optical element (20) on the testing circuit (2) by using a direct-write process, wherein the micro-optical element (20) is being produced as a separate element with regard to the testing circuit (2) and in mechanical contact with the testing circuit (2), wherein the micro-optical element (20) is produced in a manner that an alignment accuracy of at least 1000 nm with respect to a coupling location (14, 14b) at the testing circuit (2) is obtained,
wherein the micro-optical element (20) is configured to optically couple light between the testing circuit (2) and a micro-optical component (50), thereby being configured to determine an optical performance of the micro-optical component (50).

12. The method according to the preceding claim, further comprising at least one of the following steps:
(iii) detecting at least one marker (21) within the testing circuit (2) prior to step (ii);
(iv) producing at least one marker (21) configured for alignment during step (ii);
(v) detecting the light being emitted from the testing circuit (2) prior to step (ii);
(vi) optically coupling the light into the testing circuit (2) for detecting a further coupling location (51) located at a surface of the micro-optical component (50) prior to step (ii);
(vii) fixing the testing circuit (2) on a mechanical support (6) prior to step (ii);
(viii) applying an adhesion promoter on the testing circuit (2) prior to step (ii);
(ix) aligning the micro-optical element (20) with respect to a fiber core (13) comprised by the testing circuit (2) to a variation of at least 1 µm;
(x) calibrating the optical performance of the optical probe (1) prior to step (ii).

13. A method for optical testing of at least one micro-optical component (50), the method comprising the following steps:
a) providing an optical probe (1), wherein the optical probe (1) comprises a probe head (10) and at least one micro-optical element (20), wherein an optical performance of the probe head (10) is calibrated and wherein the probe head (10) comprises a testing circuit (2), wherein the testing circuit (2) is fixed on a mechanical support (6), and wherein the micro-optical element (20) is a separate element with regard to the testing circuit (2) and in mechanical contact with the testing circuit (2); and
b) positioning the probe head (10) in a manner that the micro-optical element (20) optically couples light between the testing circuit (2) and the micro-optical component (50), wherein the micro-optical element (20) has an alignment accuracy of at least 1000 nm with respect to a coupling location (14, 14b) at the testing circuit (2); and
c) determining an optical performance of the micro-optical component (50) by measuring an optical signal being indicative for the optical performance of the micro-optical component (50).

14. The method according to the preceding claim, wherein the micro-optical element (20) comprises a photoresist produced on the testing circuit (2).

15. The method according to any one of the two preceding claims, further comprising at least one of the following steps:
d) calibrating the optical performance of the probe head (10) prior to performing step (b);
e) modifying the optical signal by using an optical phase array;
f) inserting at least one part of the micro-optical element (20) into a trench (55) comprised by the micro-optical component (50) in a manner that the light is optically coupled between the testing circuit (2) and the micro-optical component (50);
g) matching a pitch of at least two micro-optical elements (20) to a further coupling location (51) located at a surface of the micro-optical component (50) by using the testing circuit (2).

## Patentansprüche

1. Optische Sonde (1), die zum optischen Testen wenigstens einer mikrooptischen Komponente (50) konfiguriert ist, umfassend
- einen Sondenkopf (10), wobei eine optische Leistungsfähigkeit des Sondenkopfs (10) kalibriert ist und wobei der Sondenkopf (10) einen Testschaltkreis (2) umfasst, wobei der Testschaltkreis (2) auf einer mechanischen Stütze fixierbar ist;
- wenigstens ein mikrooptisches Element (20), wobei das mikrooptische Element (20) ein separates Element in Bezug auf den Testschaltkreis (2) ist und in mechanischem Kontakt mit dem Testschaltkreis (2) steht,
wobei das mikrooptische Element (20) dazu konfiguriert ist, Licht optisch zwischen dem Testschaltkreis (2) und der mikrooptischen Komponente (50) zu koppeln, wobei das mikrooptische Element (20) eine Ausrichtungsgenauigkeit von wenigstens 1000 nm in Bezug auf einen Kopplungsort (14, 14b) an dem Testschaltkreis (2) aufweist, wodurch es dazu konfiguriert ist, eine optische Leistungsfähigkeit der mikrooptischen Komponente (50) zu bestimmen.

2. Optische Sonde nach dem vorhergehenden Anspruch, wobei das mikrooptische Element (20) einen Fotolack umfasst, der auf dem Testschaltkreis (2) hergestellt ist.

3. Optische Sonde nach einem der vorhergehenden Ansprüche, wobei der Testschaltkreis (2) dazu konfiguriert ist, mit einem Faserarray (11) gekoppelt zu werden.

4. Optische Sonde nach dem vorhergehenden Anspruch, wobei der Testschaltkreis (2) dazu konfiguriert ist, entweder ein Rastermaß oder einen Modenfelddurchmesser des Faserarrays (11) zu modifizieren.

5. Optische Sonde nach einem der vorhergehenden Ansprüche, wobei der Testschaltkreis (2) wenigstens eine von Folgendem aufweist:
- eine mechanische Funktionalität;
- eine elektrische Funktionalität;
- eine optische Funktionalität, wobei die optische Funktionalität unabhängig von der optischen Funktionalität des mikrooptischen Elements (20) ist.

6. Optische Sonde nach einem der vorhergehenden Ansprüche, wobei der Testschaltkreis (2) wenigstens eine von Folgendem umfasst:
- einen Fotodetektor;
- eine Lichtquelle;
- einen optischen Modulator;
- einen Spektrumanalysator;
- einen Leistungsteiler
- einen Polarisationsteiler, ein Polarisationsfilter oder einen Polarisation-Stripper;
- einen Multiplexer.

7. Optische Sonde nach einem der vorhergehenden Ansprüche, wobei ein Rastermaß des Testschaltkreises (2) 80 µm oder weniger beträgt.

8. Optische Sonde nach einem der vorhergehenden Ansprüche, wobei ein Modenfeldrastermaß des mikrooptischen Elements (20) um 1000 nm oder weniger variiert.

9. Optische Sonde nach einem der vorhergehenden Ansprüche, wobei eine Standardabweichung einer Variation eines Modenfelddurchmessers 20 % oder weniger eines durchschnittlichen Modenfeldes beträgt.

10. Optische Sonde nach einem der vorhergehenden Ansprüche, wobei der Sondenkopf (10) dazu konfiguriert ist, als ein optisches Phasenarray zu fungieren.

11. Verfahren zum Herstellen einer optischen Sonde (1), die zum optischen Testen wenigstens einer mikrooptischen Komponente (50) konfiguriert ist, insbesondere der optischen Sonde (1) nach einem der vorhergehenden Ansprüche, wobei das Verfahren die folgenden Schritte umfasst:
(i) Bereitstellen eines Sondenkopfs (10), wobei eine optische Leistungsfähigkeit des Sondenkopfs (10) kalibriert ist und wobei der Sondenkopf (10) einen Testschaltkreis (2) umfasst, wobei der Testschaltkreis (2) auf einer mechanischen Stütze (6) fixiert ist; und
(ii) Herstellen wenigstens eines mikrooptischen Elements (20) auf dem Testschaltkreis (2) durch Verwenden eines Direktschreibprozesses, wobei das mikrooptische Element (20) als ein separates Element in Bezug auf den Testschaltkreis (2) und in mechanischem Kontakt mit dem Testschaltkreis (2) hergestellt wird, wobei das mikrooptische Element (20) auf eine solche Weise hergestellt wird, dass eine Ausrichtungsgenauigkeit von wenigstens 1000 nm in Bezug auf einen Kopplungsort (14, 14b) an dem Testschaltkreis (2) erhalten wird,
wobei das mikrooptische Element (20) dazu konfiguriert ist, Licht optisch zwischen dem Testschaltkreis (2) und einer mikrooptischen Komponente (50) zu koppeln, wodurch es dazu konfiguriert wird, eine optische Leistungsfähigkeit der mikrooptischen Komponente (50) zu bestimmen.

12. Verfahren nach dem vorhergehenden Anspruch, das ferner wenigstens einen der folgenden Schritte umfasst:
(iii) Detektieren wenigstens eines Markers (21) innerhalb des Testschaltkreises (2) vor Schritt (ii);
(iv) Herstellen wenigstens eines Markers (21), der zur Ausrichtung während Schritt (ii) konfiguriert ist;
(v) Detektieren des Lichts, das von dem Testschaltkreis (2) emittiert wird, vor Schritt (ii);
(vi) optisches Einkoppeln des Lichts in den Testschaltkreis (2) zum Detektieren eines weiteren Kopplungsortes (51), der sich an einer Oberfläche der mikrooptischen Komponente (50) befindet, vor Schritt (ii);
vii) Fixieren des Testschaltkreises (2) an einer mechanischen Stütze (6) vor Schritt (ii);
(viii) Aufbringen eines Haftvermittlers auf dem Testschaltkreis (2) vor Schritt (II);
(ix) Ausrichten des mikrooptischen Elements (20) in Bezug auf einen Faserkern (13), der in dem Testschaltkreis (2) enthalten ist, auf eine Variation von wenigstens 1 µm;
(x) Kalibrieren der optischen Leistungsfähigkeit der optischen Sonde (1) vor Schritt (ii).

13. Verfahren zum optischen Testen wenigstens einer mikrooptischen Komponente (50), wobei das Verfahren die folgenden Schritte umfasst:
a) Bereitstellen einer optischen Sonde (1), wobei die optische Sonde (1) einen Sondenkopf (10) und wenigstens ein mikrooptisches Element (20) umfasst, wobei eine optische Leistungsfähigkeit des Sondenkopfs (10) kalibriert ist und wobei der Sondenkopf (10) einen Testschaltkreis (2) umfasst, wobei der Testschaltkreis (2) an einer mechanischen Stütze (6) fixiert ist, und wobei das mikrooptische Element (20) ein separates Element in Bezug auf den Testschaltkreis (2) und in mechanischem Kontakt mit dem Testschaltkreis (2) ist; und
b) Positionieren des Sondenkopfs (10) auf eine solche Weise, dass das mikrooptische Element (20) Licht optisch zwischen dem Testschaltkreis (2) und der mikrooptischen Komponente (50) koppelt, wobei das mikrooptische Element (20) eine Ausrichtungsgenauigkeit von wenigstens 1000 nm in Bezug auf einen Kopplungsort (14, 14b) an dem Testschaltkreis (2) aufweist; und
c) Bestimmen einer optischen Leistungsfähigkeit der mikrooptischen Komponente (50) durch Messen eines optischen Signals, das die optische Leistungsfähigkeit der mikrooptischen Komponente (50) angibt.

14. Verfahren nach dem vorhergehenden Anspruch, wobei das mikrooptische Element (20) einen Fotolack umfasst, der auf dem Testschaltkreis (2) hergestellt ist.

15. Verfahren nach einem der zwei vorhergehenden Ansprüche, das ferner wenigstens einen der folgenden Schritte umfasst:
d) Kalibrieren der optischen Leistungsfähigkeit des Sondenkopfs (10) vor Durchführen des Schritts (b);
e) Modifizieren des optischen Signals durch Verwenden eines optischen Phasenarrays;
f) Einführen wenigstens eines Teils des mikrooptischen Elements (20) in einen Graben (55), der in der mikrooptischen Komponente (50) enthalten ist, auf eine solche Weise, dass das Licht optisch zwischen dem Testschaltkreis (2) und der mikrooptischen Komponente (50) gekoppelt wird;
g) Angleichen eines Rastermaßes von wenigstens zwei mikrooptischen Elementen (20) an einen weiteren Kopplungsort (51), der sich an einer Oberfläche der mikrooptischen Komponente (50) befindet, durch Verwenden des Testschaltkreises (2).

## Revendications

1. Sonde optique (1) configurée pour un test optique d'au moins un composant micro-optique (50), comprenant,
- une tête de sonde (10), dans laquelle une performance optique de la tête de sonde (10) est étalonnée, et dans laquelle la tête de sonde (10) comprend un circuit de test (2), dans laquelle le circuit de test (2) peut être fixé sur un support mécanique ;
- au moins un élément micro-optique (20), dans laquelle l'élément micro-optique (20) est un élément séparé par rapport au circuit de test (2) et en contact mécanique avec le circuit de test (2),
dans laquelle l'élément micro-optique (20) est configuré pour coupler optiquement la lumière entre le circuit de test (2) et le composant micro-optique (50), dans laquelle l'élément micro-optique (20) a une précision d'alignement d'au moins 1000 nm par rapport à un emplacement de couplage (14, 14b) au niveau du circuit de test (2), étant ainsi configuré pour déterminer une performance optique du composant micro-optique (50).

2. Sonde optique selon la revendication précédente, dans laquelle l'élément micro-optique (20) comprend une résine photosensible produite sur le circuit de test (2).

3. Sonde optique selon l'une quelconque des revendications précédentes, dans laquelle le circuit de test (2) est configuré pour être couplé à un réseau de fibres (11).

4. Sonde optique selon la revendication précédente, dans laquelle le circuit de test (2) est configuré pour modifier soit un pas, soit un diamètre du champ de mode du réseau de fibres (11).

5. Sonde optique selon l'une quelconque des revendications précédentes, dans laquelle le circuit de test (2) a au moins un parmi :
- une fonctionnalité mécanique ;
- une fonctionnalité électrique ;
- une fonctionnalité optique, dans laquelle la fonctionnalité optique est indépendante de la fonctionnalité optique de l'élément micro-optique (20).

6. Sonde optique selon l'une quelconque des revendications précédentes, dans laquelle le circuit de test (2) comprend au moins un parmi :
- un photodétecteur ;
- une source lumineuse ;
- un modulateur optique ;
- un analyseur de spectre ;
- un diviseur de puissance ;
- un séparateur, un filtre ou un éliminateur de polarisation ;
- un multiplexeur.

7. Sonde optique selon l'une quelconque des revendications précédentes, dans laquelle un pas du circuit de test (2) est de 80 µm ou moins.

8. Sonde optique selon l'une quelconque des revendications précédentes, dans laquelle un pas de champ de mode de l'élément micro-optique (20) varie de 1000 nm à moins.

9. Sonde optique selon l'une quelconque des revendications précédentes, dans laquelle un écart-type d'une variation d'un diamètre de champ de mode est de 20 % ou moins d'un champ de mode moyen.

10. Sonde optique selon l'une quelconque des revendications précédentes, dans laquelle la tête de sonde (10) est configurée pour fonctionner comme un réseau de phases optiques.

11. Méthode de production d'une sonde optique (1) configurée pour un test optique d'au moins un composant micro-optique (50), en particulier la sonde optique (1) selon l'une quelconque des revendications précédentes, la méthode comprenant les étapes suivantes :
(i) fournir une tête de sonde (10), dans laquelle une performance optique de la tête de sonde (10) est étalonnée, et dans laquelle la tête de sonde (10) comprend un circuit de test (2), dans laquelle le circuit de test (2) est fixé sur un support mécanique (6) ; et
(ii) produire au moins un élément micro-optique (20) sur le circuit de test (2) en utilisant un procédé d'écriture directe, dans laquelle l'élément micro-optique (20) est produit comme élément séparé par rapport au circuit de test (2) et en contact mécanique avec le circuit de test (2), dans laquelle l'élément micro-optique (20) est produit de manière à obtenir une précision d'alignement d'au moins 1000 nm par rapport à un emplacement de couplage (14, 14b) au niveau du circuit de test (2),
dans laquelle l'élément micro-optique (20) est configuré pour coupler optiquement la lumière entre le circuit de test (2) et un composant micro-optique (50), étant ainsi configuré pour déterminer une performance optique du composant micro-optique (50).

12. Méthode selon la revendication précédente, comprenant en outre au moins l'une des étapes suivantes :
(iii) détecter au moins un marqueur (21) au sein du circuit de test (2) avant l'étape (ii) ;
(iv) produire au moins un marqueur (21) configuré pour l'alignement au cours de l'étape (ii) ;
(v) détecter la lumière émise par le circuit de test (2) avant l'étape (ii) ;
(vi) coupler optiquement la lumière dans le circuit de test (2) pour détecter un emplacement de couplage (51) supplémentaire situé au niveau d'une surface du composant micro-optique (50) avant l'étape (ii) ;
(vii) fixer le circuit de test (2) sur un support mécanique (6) avant l'étape (ii) ;
(viii) appliquer un promoteur d'adhérence sur le circuit de test (2) avant l'étape (ii) ;
(ix) aligner l'élément micro-optique (20) par rapport à un cœur de fibre (13) compris dans le circuit de test (2) avec une tolérance d'au moins 1 µm ;
(x) étalonner la performance optique de la sonde optique (1) avant l'étape (ii).

13. Méthode de test optique d'au moins un composant micro-optique (50), la méthode comprenant les étapes suivantes :
a) fournir une sonde optique (1), dans laquelle la sonde optique (1) comprend une tête de sonde (10) et au moins un élément micro-optique (20), dans laquelle une performance optique de la tête de sonde (10) est étalonnée, et dans laquelle la tête de sonde (10) comprend un circuit de test (2), dans laquelle le circuit de test (2) est fixé sur un support mécanique (6), et dans laquelle l'élément micro-optique (20) est un élément séparé par rapport au circuit de test (2) et en contact mécanique avec le circuit de test (2) ; et
b) positionner la tête de sonde (10) de manière à ce que l'élément micro-optique (20) couple optiquement la lumière entre le circuit de test (2) et le composant micro-optique (50), dans laquelle l'élément micro-optique (20) a une précision d'alignement d'au moins 1000 nm par rapport à un emplacement de couplage (14, 14b) au niveau du circuit de test (2) ; et
c) déterminer une performance optique du composant micro-optique (50) en mesurant un signal optique indiquant la performance optique du composant micro-optique (50).

14. Méthode selon la revendication précédente, dans laquelle l'élément micro-optique (20) comprend une résine photosensible produite sur le circuit de test (2).

15. Méthode selon l'une quelconque des deux revendications précédentes, comprenant en outre au moins l'une des étapes suivantes :
d) étalonner la performance optique de la tête de sonde (10) avant de réaliser l'étape (b) ;
e) modifier le signal optique en utilisant un réseau de phases optiques ;
f) insérer au moins une partie de l'élément micro-optique (20) dans une tranchée (55) comprise dans le composant micro-optique (50) de manière à coupler optiquement la lumière entre le circuit de test (2) et le composant micro-optique (50) ;
g) apparier un pas d'au moins deux éléments micro-optiques (20) à un emplacement de couplage (51) supplémentaire situé au niveau d'une surface du composant micro-optique (50) en utilisant le circuit de test (2).
